# EUROPEAN PATENT SPECIFICATION

(11) **EP 3 238 091 B1**
(45) Date of publication and mention of the grant of the patent: **13.05.2020**
(21) Application number: 15873914.4
(22) Date of filing: 16.11.2015
(51) Int. Cl.: G06F 9/30, G06F 9/38

(54) **FAST VECTOR DYNAMIC MEMORY CONFLICT DETECTION**
SCHNELLE VEKTORKONFLIKTERKENNUNG IN EINEM DYNAMISCHEN SPEICHER
DÉTECTION DE CONFLIT DE MÉMOIRE DYNAMIQUE RAPIDE DE VECTEUR

(30) Priority: 23.12.2014 US 201414581996
(43) Date of publication of application: 01.11.2017
(73) Proprietor: Intel Corporation, Santa Clara, CA 95054 (US)
(72) Inventor: WANG, Cheng, San Ramon, California 94582 (US); HARTONO, Albert, Santa Clara, California 95054 (US); BAGHSORKHI, Sara S., San Jose, California 95134 (US); WU, Youfeng, Palo Alto, California 94306 (US)
(74) Representative: Samson & Partner Patentanwälte mbB
(86) International application number: PCT/US2015/060818
(87) International publication number: WO 2016/105691

(56) References cited:
- WO-A1-2014/142972
- US-A1- 2008 288 744
- US-A1- 2008 288 744
- US-A1- 2008 288 745
- US-A1- 2008 288 759
- US-A1- 2012 159 130
- US-A1- 2012 166 761
- US-A1- 2013 036 268
- US-A1- 2013 166 516
- US-A1- 2014 089 634
- US-A1- 2014 095 843
- US-A1- 2014 289 498

## Description

### FIELD OF THE INVENTION

The present disclosure pertains to the field of processing logic, microprocessors, and associated instruction set architecture that, when executed by the processor or other processing logic, perform logical, mathematical, or other functional operations.

### DESCRIPTION OF RELATED ART

Many applications have large amounts of data-level parallelism and should be able to benefit from single-instruction multiple-data (SIMD) support. In SIMD execution, a single instruction operates on multiple data elements simultaneously. This is typically implemented by extending the width of various resources such as registers and arithmetic logic units (ALUs), allowing them to hold or operate on multiple data elements, respectively. However, most such applications have been initially designed as scalar processes, i.e., single-instruction single-data (SISD), configured to process one instruction and one data element at a time. Converting scalar processes into SIMD processes (i.e., "vectorization") may provide operational improvements including shortened processing time and enhanced resource utilization. However, it is important to ensure that scalar program order is preserved when necessary due to conflicts and dependencies within the data.

US 2008/288744 A1 relates to instructions that prevent memory hazards in vector or parallel processing. In particular, a method for performing parallel operations in a computer system when one or more memory hazards may be present, is implemented by a processor. During operation, the processor receives instructions for detecting conflict between memory addresses in vectors when memory operations are performed in parallel using at least a portion of the vectors, and tracking positions in at least one of the vectors of any detected conflict between the memory addresses. Next, the processor executes the instructions for detecting the conflict between the memory addresses and tracking the positions.

US 2014/089634 A1 relate to an apparatus and method for detecting identical elements within a vector register. For example, the computer implemented method for identifying identical elements in a vector register comprises the operations of: reading each active element from a first vector register, each active element having a defined bit position within the first vector register; reading each element from a second vector register, each element having a defined bit position within the second vector register corresponding to a bit position of a current active element in the first vector register; reading an input mask register, the input mask register identifying active bit positions in the second vector register for which comparisons are to be made with values in the first vector register, the comparison operations comprising: comparing each active element in the second vector register with elements in the first vector register having bit positions preceding the bit position of the current active element in the second vector register; and setting a bit position in an output mask register equal to a true value if all of the preceding bit positions in the first vector register are equal to the bit in the current active bit position in the second vector register.

### SUMMARY

The present invention is defined in the independent claims. The dependent claims define embodiments thereof.

### DESCRIPTION OF THE FIGURES

Embodiments are illustrated by way of example and not limitation in the Figures of the accompanying drawings, in which:
**FIG. 1A** is a block diagram illustrating both an exemplary in-order fetch, decode, retire pipeline and an exemplary register renaming, out-of-order issue/execution pipeline according to embodiments;
**FIG. 1B** is a block diagram illustrating both an exemplary embodiment of an in-order fetch, decode, retire core and an exemplary register renaming, out-of-order issue/execution architecture core to be included in a processor according to embodiments;
**FIG. 2A-B** are block diagrams of a more specific exemplary in-order core architecture
**FIG. 3** is a block diagram of a single core processor and a multicore processor with integrated memory controller and special purpose logic;
**FIG. 4** illustrates a block diagram of a system in accordance with an embodiment;
**FIG. 5** illustrates a block diagram of a second system in accordance with an embodiment;
**FIG. 6** illustrates a block diagram of a third system in accordance with an embodiment;
**FIG. 7** illustrates a block diagram of a system on a chip (SoC) in accordance with an embodiment;
**FIG. 8** illustrates a block diagram contrasting the use of a software instruction converter to convert binary instructions in a source instruction set to binary instructions in a target instruction set according to embodiments;
**FIG. 9** is a block diagram showing runtime data conflicts between exemplary vectors, according to an embodiment;
**FIG. 10** is a block diagram of logic to compute a stop bit vector, according to an embodiment;
**FIG. 11** is a matrix representation of an exemplary conflict vector;
**FIG. 12** is a directed acyclic graph illustrating computation of partition vector, according to an embodiment;
**FIG. 13** is a, according to an embodiment;
**FIG. 14** is, according to an embodiment;
**FIG. 15** is, according to an embodiment;
**FIGS. 16A-B** are block diagrams illustrating a generic vector friendly instruction format and instruction templates thereof according to embodiments;
**FIGS. 17A-D** are block diagrams illustrating an exemplary specific vector friendly instruction format according to embodiments of the invention; and
**FIG. 18** is a block diagram of a register architecture according to an embodiment.

### DETAILED DESCRIPTION

Described below are processor core architectures, followed by descriptions of exemplary processors and computer architectures and instruction formats for an instruction to dynamically detect memory conflicts using vector-processing operations. Numerous specific details are set forth in order to provide a thorough understanding of the embodiments of the invention described below. It will be apparent, however, to one skilled in the art that the embodiments may be practiced without some of these specific details. In other instances, well-known structures and devices are shown in block diagram form to avoid obscuring the underlying principles of the embodiments of the invention.

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (e.g., many integrated core processors). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality.

### Exemplary Core Architectures

### In-order and out-of-order core block diagram

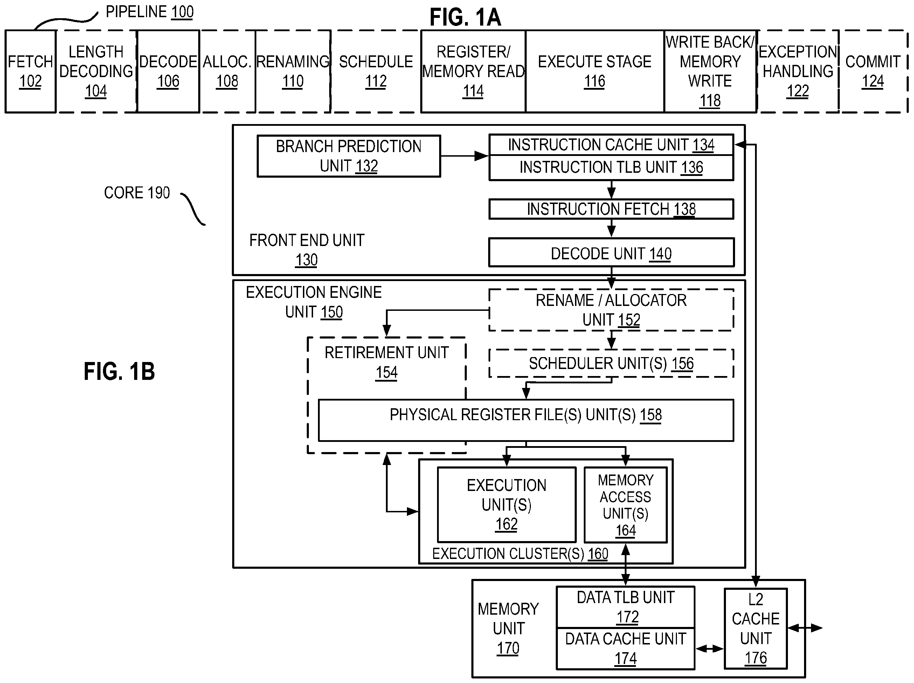

**Figure 1A** is a block diagram illustrating an exemplary in-order pipeline and an exemplary register renaming out-of-order issue/execution pipeline, according to an embodiment. **Figure 1B** is a block diagram illustrating both an exemplary embodiment of an in-order architecture core and an exemplary register renaming, out-of-order issue/execution architecture core to be included in a processor according to an embodiment. The solid lined boxes in Figures 1A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In Figure 1A, a processor pipeline 100 includes a fetch stage 102, a length decode stage 104, a decode stage 106, an allocation stage 108, a renaming stage 110, a scheduling (also known as a dispatch or issue) stage 112, a register read/memory read stage 114, an execute stage 116, a write back/memory write stage 118, an exception handling stage 122, and a commit stage 124.

Figure 1B shows processor core 190 including a front end unit 130 coupled to an execution engine unit 150, and both are coupled to a memory unit 170. The core 190 may be a reduced instruction set computing (RISC) core, a complex instruction set computing (CISC) core, a very long instruction word (VLIW) core, or a hybrid or alternative core type. As yet another option, the core 190 may be a special-purpose core, such as, for example, a network or communication core, compression engine, coprocessor core, general purpose computing graphics processing unit (GPGPU) core, graphics core, or the like.

The front end unit 130 includes a branch prediction unit 132 coupled to an instruction cache unit 134, which is coupled to an instruction translation lookaside buffer (TLB) 136, which is coupled to an instruction fetch unit 138, which is coupled to a decode unit 140. The decode unit 140 (or decoder) may decode instructions, and generate as an output one or more micro-operations, micro-code entry points, microinstructions, other instructions, or other control signals, which are decoded from, or which otherwise reflect, or are derived from, the original instructions. The decode unit 140 may be implemented using various different mechanisms. Examples of suitable mechanisms include, but are not limited to, look-up tables, hardware implementations, programmable logic arrays (PLAs), microcode read only memories (ROMs), etc. In one embodiment, the core 190 includes a microcode ROM or other medium that stores microcode for certain macroinstructions (e.g., in decode unit 140 or otherwise within the front end unit 130). The decode unit 140 is coupled to a rename/allocator unit 152 in the execution engine unit 150.

The execution engine unit 150 includes the rename/allocator unit 152 coupled to a retirement unit 154 and a set of one or more scheduler unit(s) 156. The scheduler unit(s) 156 represents any number of different schedulers, including reservations stations, central instruction window, etc. The scheduler unit(s) 156 is coupled to the physical register file(s) unit(s) 158. Each of the physical register file(s) units 158 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 158 comprises a vector registers unit, a write mask registers unit, and a scalar registers unit. These register units may provide architectural vector registers, vector mask registers, and general-purpose registers. The physical register file(s) unit(s) 158 is overlapped by the retirement unit 154 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 154 and the physical register file(s) unit(s) 158 are coupled to the execution cluster(s) 160. The execution cluster(s) 160 includes a set of one or more execution units 162 and a set of one or more memory access units 164. The execution units 162 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 156, physical register file(s) unit(s) 158, and execution cluster(s) 160 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 164). It should also be understood that where separate pipelines are used, one or more of these pipelines may be out-of-order issue/execution and the rest in-order.

The set of memory access units 164 is coupled to the memory unit 170, which includes a data TLB unit 172 coupled to a data cache unit 174 coupled to a level 2 (L2) cache unit 176. In one exemplary embodiment, the memory access units 164 may include a load unit, a store address unit, and a store data unit, each of which is coupled to the data TLB unit 172 in the memory unit 170. The instruction cache unit 134 is further coupled to a level 2 (L2) cache unit 176 in the memory unit 170. The L2 cache unit 176 is coupled to one or more other levels of cache and eventually to a main memory.

By way of example, the exemplary register renaming, out-of-order issue/execution core architecture may implement the pipeline 100 as follows: 1) the instruction fetch 138 performs the fetch and length decoding stages 102 and 104; 2) the decode unit 140 performs the decode stage 106; 3) the rename/allocator unit 152 performs the allocation stage 108 and renaming stage 110; 4) the scheduler unit(s) 156 performs the schedule stage 112; 5) the physical register file(s) unit(s) 158 and the memory unit 170 perform the register read/memory read stage 114; the execution cluster 160 perform the execute stage 116; 6) the memory unit 170 and the physical register file(s) unit(s) 158 perform the write back/memory write stage 118; 7) various units may be involved in the exception handling stage 122; and 8) the retirement unit 154 and the physical register file(s) unit(s) 158 perform the commit stage 124.

The core 190 may support one or more instructions sets (e.g., the x86 instruction set (with some extensions that have been added with newer versions); the MIPS instruction set of MIPS Technologies of Sunnyvale, CA; the ARM® instruction set (with optional additional extensions such as NEON) of ARM Holdings of Cambridge, England), including the instruction(s) described herein. In one embodiment, the core 190 includes logic to support a packed data instruction set extension (e.g., AVX1, AVX2, etc.), allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyper-Threading Technology).

While register renaming is described in the context of out-of-order execution, it should be understood that register renaming may be used in an in-order architecture. While the illustrated embodiment of the processor also includes separate instruction and data cache units 134/174 and a shared L2 cache unit 176, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

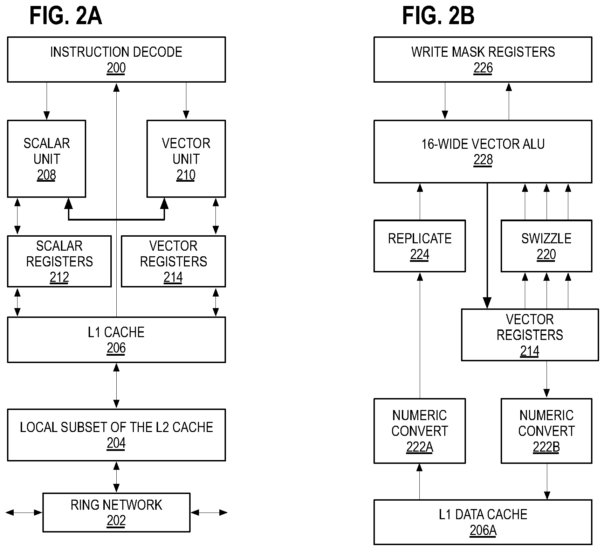

**Figures 2A-B** are block diagrams of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

Figure 2A is a block diagram of a single processor core, along with its connection to the on-die interconnect network 202 and with its local subset of the Level 2 (L2) cache 204, according to an embodiment. In one embodiment, an instruction decoder 200 supports the x86 instruction set with a packed data instruction set extension. An L1 cache 206 allows low-latency accesses to cache memory into the scalar and vector units. While in one embodiment (to simplify the design), a scalar unit 208 and a vector unit 210 use separate register sets (respectively, scalar registers 212 and vector registers 214) and data transferred between them is written to memory and then read back in from a level 1 (L1) cache 206, alternative embodiments may use a different approach (e.g., use a single register set or include a communication path that allow data to be transferred between the two register files without being written and read back).

The local subset of the L2 cache 204 is part of a global L2 cache that is divided into separate local subsets, one per processor core. Each processor core has a direct access path to its own local subset of the L2 cache 204. Data read by a processor core is stored in its L2 cache subset 204 and can be accessed quickly, in parallel with other processor cores accessing their own local L2 cache subsets. Data written by a processor core is stored in its own L2 cache subset 204 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

Figure 2B is an expanded view of part of the processor core in Figure 2A according to an embodiment. Figure 2B includes an L1 data cache 206A part of the L1 cache 204, as well as more detail regarding the vector unit 210 and the vector registers 214. Specifically, the vector unit 210 is a 16-wide vector processing unit (VPU) (see the 16-wide ALU 228), which executes one or more of integer, single-precision float, and double-precision float instructions. The VPU supports swizzling the register inputs with swizzle unit 220, numeric conversion with numeric convert units 222A-B, and replication with replication unit 224 on the memory input. Write mask registers 226 allow predicating resulting vector writes.

### Processor with integrated memory controller and special purpose logic

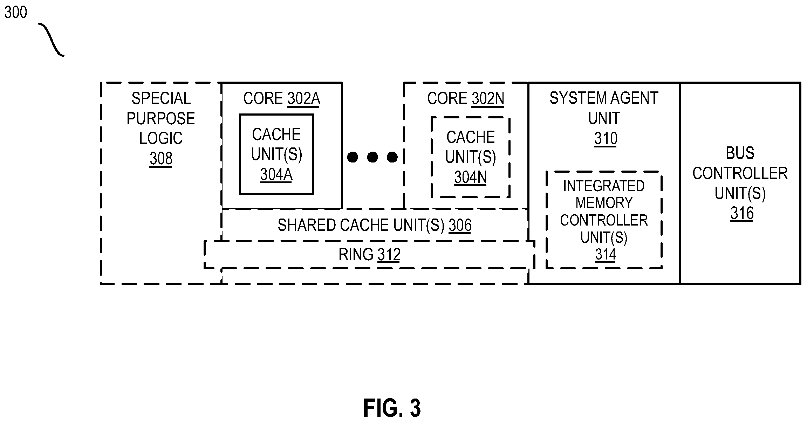

**Figure 3** is a block diagram of a processor 300 that may have more than one core, may have an integrated memory controller, and may have integrated graphics according to an embodiment. The solid lined boxes in Figure 3 illustrate a processor 300 with a single core 302A, a system agent 310, a set of one or more bus controller units 316, while the optional addition of the dashed lined boxes illustrates an alternative processor 300 with multiple cores 302A-N, a set of one or more integrated memory controller unit(s) 314 in the system agent unit 310, and special purpose logic 308.

Thus, different implementations of the processor 300 may include: 1) a CPU with the special purpose logic 308 being integrated graphics and/or scientific (throughput) logic (which may include one or more cores), and the cores 302A-N being one or more general purpose cores (e.g., general purpose in-order cores, general purpose out-of-order cores, a combination of the two); 2) a coprocessor with the cores 302A-N being a large number of special purpose cores intended primarily for graphics and/or scientific (throughput); and 3) a coprocessor with the cores 302A-N being a large number of general purpose in-order cores. Thus, the processor 300 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 300 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 306, and external memory (not shown) coupled to the set of integrated memory controller units 314. The set of shared cache units 306 may include one or more mid-level caches, such as level 2 (L2), level 3 (L3), level 4 (L4), or other levels of cache, a last level cache (LLC), and/or combinations thereof. While in one embodiment a ring based interconnect unit 312 interconnects the integrated graphics logic 308, the set of shared cache units 306, and the system agent unit 310/integrated memory controller unit(s) 314, alternative embodiments may use any number of well-known techniques for interconnecting such units. In one embodiment, coherency is maintained between one or more cache units 306 and cores 302-A-N.

In some embodiments, one or more of the cores 302A-N are capable of multithreading. The system agent 310 includes those components coordinating and operating cores 302A-N. The system agent unit 310 may include for example a power control unit (PCU) and a display unit. The PCU may be or include logic and components needed for regulating the power state of the cores 302A-N and the integrated graphics logic 308. The display unit is for driving one or more externally connected displays.

The cores 302A-N may be homogenous or heterogeneous in terms of architecture instruction set; that is, two or more of the cores 302A-N may be capable of execution the same instruction set, while others may be capable of executing only a subset of that instruction set or a different instruction set.

### Exemplary Computer Architectures

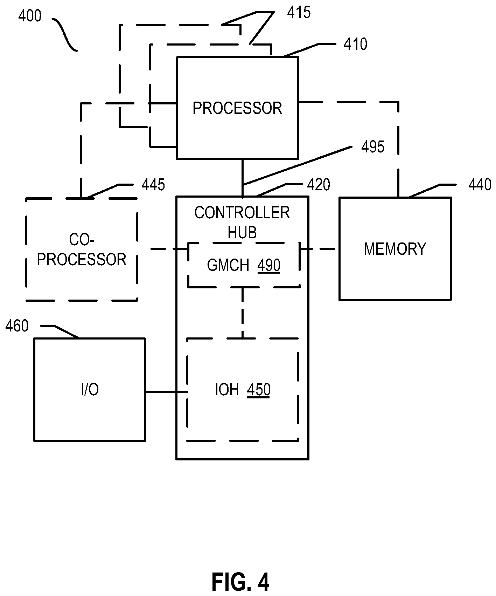

**Figures 4-7** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 4****,** shown is a block diagram of a system 400 in accordance with one embodiment of the present invention. The system 400 may include one or more processors 410, 415, which are coupled to a controller hub 420. In one embodiment the controller hub 420 includes a graphics memory controller hub (GMCH) 490 and an Input/Output Hub (IOH) 450 (which may be on separate chips); the GMCH 490 includes memory and graphics controllers to which are coupled memory 440 and a coprocessor 445; the IOH 450 is couples input/output (I/O) devices 460 to the GMCH 490. Alternatively, one or both of the memory and graphics controllers are integrated within the processor (as described herein), the memory 440 and the coprocessor 445 are coupled directly to the processor 410, and the controller hub 420 in a single chip with the IOH 450.

The optional nature of additional processors 415 is denoted in Figure 4 with broken lines. Each processor 410, 415 may include one or more of the processing cores described herein and may be some version of the processor 300.

The memory 440 may be, for example, dynamic random access memory (DRAM), phase change memory (PCM), or a combination of the two. For at least one embodiment, the controller hub 420 communicates with the processor(s) 410, 415 via a multi-drop bus, such as a frontside bus (FSB), point-to-point interface such as QuickPath Interconnect (QPI), or similar connection 495.

In one embodiment, the coprocessor 445 is a special-purpose processor, such as, for example, a high-throughput MIC processor, a network or communication processor, compression engine, graphics processor, GPGPU, embedded processor, or the like. In one embodiment, controller hub 420 may include an integrated graphics accelerator.

There can be a variety of differences between the physical resources 410, 415 in terms of a spectrum of metrics of merit including architectural, microarchitectural, thermal, power consumption characteristics, and the like.

In one embodiment, the processor 410 executes instructions that control data processing operations of a general type. Embedded within the instructions may be coprocessor instructions. The processor 410 recognizes these coprocessor instructions as being of a type that should be executed by the attached coprocessor 445. Accordingly, the processor 410 issues these coprocessor instructions (or control signals representing coprocessor instructions) on a coprocessor bus or other interconnect, to coprocessor 445. Coprocessor(s) 445 accept and execute the received coprocessor instructions.

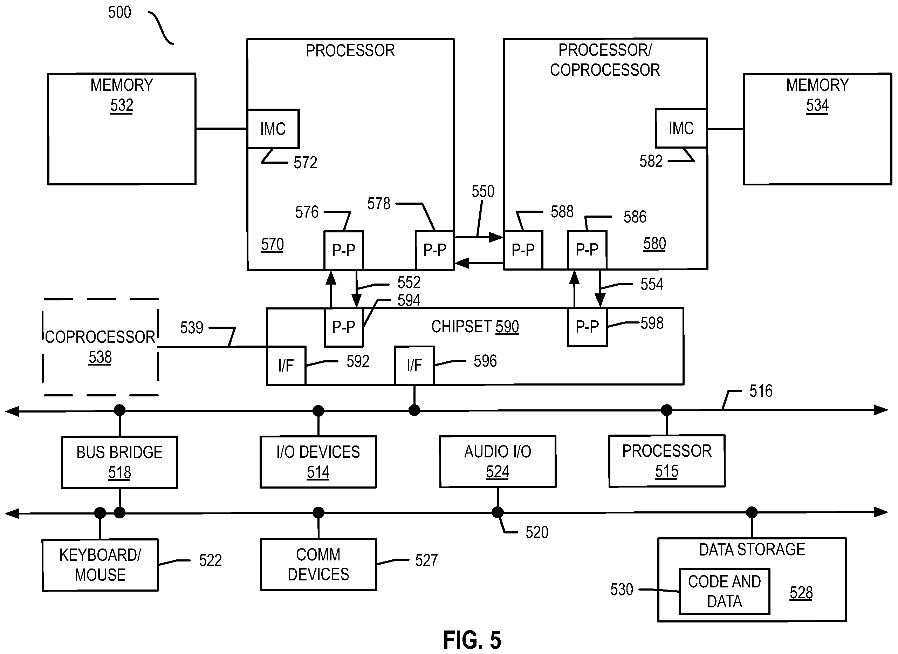

Referring now to **Figure 5****,** shown is a block diagram of a first more specific exemplary system 500 in accordance with an embodiment of the present invention. As shown in Figure 5, multiprocessor system 500 is a point-to-point interconnect system, and includes a first processor 570 and a second processor 580 coupled via a point-to-point interconnect 550. Each of processors 570 and 580 may be some version of the processor 300. In one embodiment of the invention, processors 570 and 580 are respectively processors 410 and 415, while coprocessor 538 is coprocessor 445. In another embodiment, processors 570 and 580 are respectively processor 410 coprocessor 445.

Processors 570 and 580 are shown including integrated memory controller (IMC) units 572 and 582, respectively. Processor 570 also includes as part of its bus controller units point-to-point (P-P) interfaces 576 and 578; similarly, second processor 580 includes P-P interfaces 586 and 588. Processors 570, 580 may exchange information via a point-to-point (P-P) interface 550 using P-P interface circuits 578, 588. As shown in Figure 5, IMCs 572 and 582 couple the processors to respective memories, namely a memory 532 and a memory 534, which may be portions of main memory locally attached to the respective processors.

Processors 570, 580 may each exchange information with a chipset 590 via individual P-P interfaces 552, 554 using point to point interface circuits 576, 594, 586, 598. Chipset 590 may optionally exchange information with the coprocessor 538 via a high-performance interface 539. In one embodiment, the coprocessor 538 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 590 may be coupled to a first bus 516 via an interface 596. In one embodiment, first bus 516 may be a Peripheral Component Interconnect (PCI) bus, or a bus such as a PCI Express bus or another third generation I/O interconnect bus, although the scope of the present invention is not so limited.

As shown in Figure 5, various I/O devices 514 may be coupled to first bus 516, along with a bus bridge 518 which couples first bus 516 to a second bus 520. In one embodiment, one or more additional processor(s) 515, such as coprocessors, high-throughput MIC processors, GPGPU's, accelerators (such as, e.g., graphics accelerators or digital signal processing (DSP) units), field programmable gate arrays, or any other processor, are coupled to first bus 516. In one embodiment, second bus 520 may be a low pin count (LPC) bus. Various devices may be coupled to a second bus 520 including, for example, a keyboard and/or mouse 522, communication devices 527 and a storage unit 528 such as a disk drive or other mass storage device which may include instructions/code and data 530, in one embodiment. Further, an audio I/O 524 may be coupled to the second bus 520. Note that other architectures are possible. For example, instead of the point-to-point architecture of Figure 5, a system may implement a multi-drop bus or other such architecture.

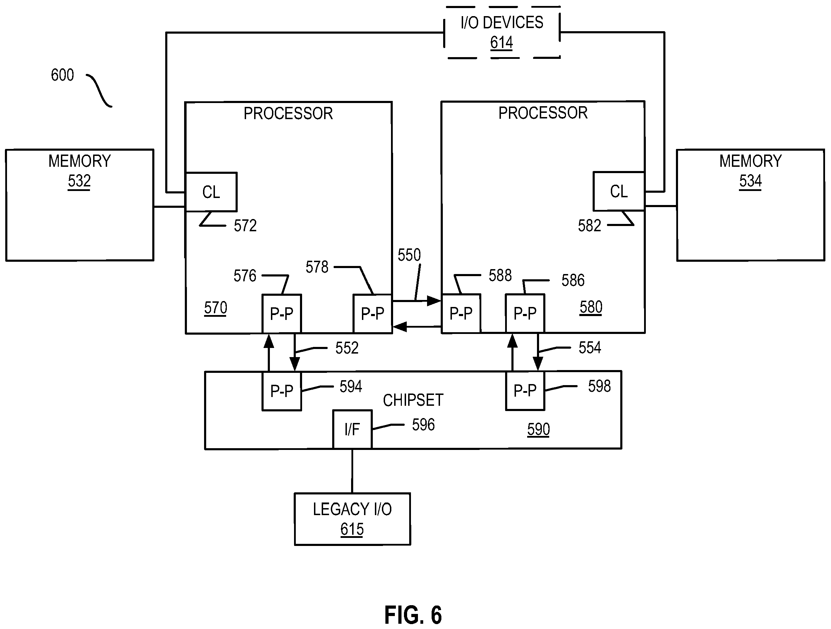

Referring now to **Figure 6****,** shown is a block diagram of a second more specific exemplary system 600 in accordance with an embodiment of the present invention. Like elements in Figures 5 and 6 bear like reference numerals, and certain aspects of Figure 5 have been omitted from Figure 6 in order to avoid obscuring other aspects of Figure 6.

Figure 6 illustrates that the processors 570, 580 may include integrated memory and I/O control logic ("CL") 572 and 582, respectively. Thus, the CL 572, 582 include integrated memory controller units and include I/O control logic. Figure 6 illustrates that not only are the memories 532, 534 coupled to the CL 572, 582, but also that I/O devices 614 are also coupled to the control logic 572, 582. Legacy I/O devices 615 are coupled to the chipset 590.

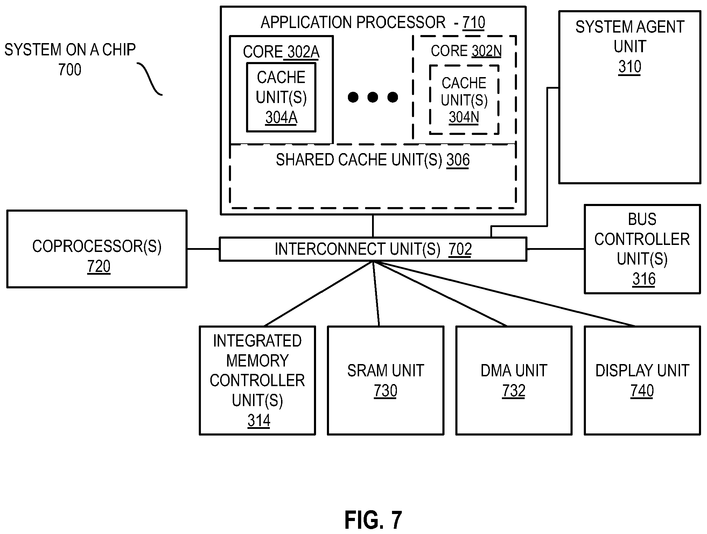

Referring now to **Figure 7****,** shown is a block diagram of a SoC 700 in accordance with an embodiment of the present invention. Similar elements in Figure 3 bear like reference numerals. Also, dashed lined boxes are optional features on more advanced SoCs. In Figure 7, an interconnect unit(s) 702 is coupled to: an application processor 710 which includes a set of one or more cores 202A-N and shared cache unit(s) 306; a system agent unit 310; a bus controller unit(s) 316; an integrated memory controller unit(s) 314; a set or one or more coprocessors 720 which may include integrated graphics logic, an image processor, an audio processor, and a video processor; an static random access memory (SRAM) unit 730; a direct memory access (DMA) unit 732; and a display unit 740 for coupling to one or more external displays. In one embodiment, the coprocessor(s) 720 include a special-purpose processor, such as, for example, a network or communication processor, compression engine, GPGPU, a high-throughput MIC processor, embedded processor, or the like.

Embodiments of the mechanisms disclosed herein are implemented in hardware, software, firmware, or a combination of such implementation approaches. Embodiments are implemented as computer programs or program code executing on programmable systems comprising at least one processor, a storage system (including volatile and non-volatile memory and/or storage elements), at least one input device, and at least one output device.

Program code, such as code 530 illustrated in Figure 5, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), rewritable compact disks (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, an embodiment also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

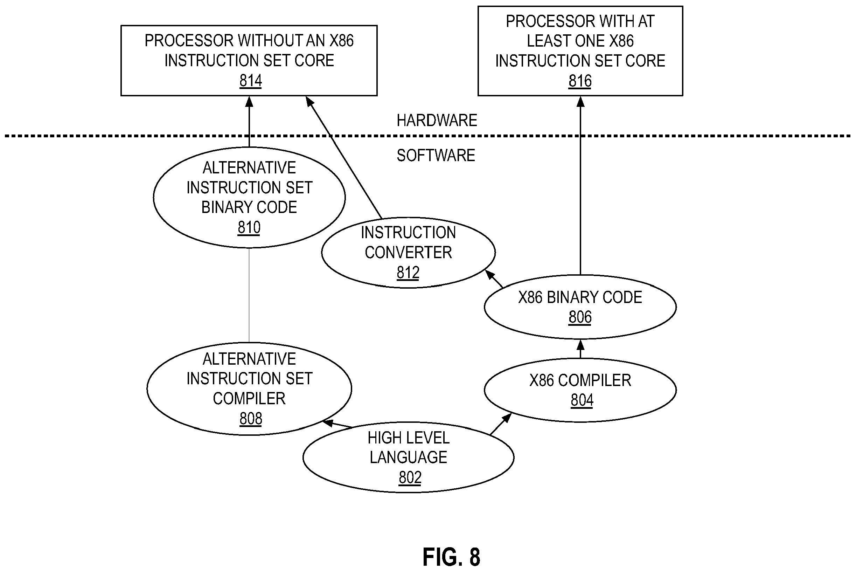

**Figure 8** is a block diagram contrasting the use of a software instruction converter to convert binary instructions in a source instruction set to binary instructions in a target instruction set according to an embodiment. In the illustrated embodiment, the instruction converter is a software instruction converter, although alternatively the instruction converter may be implemented in software, firmware, hardware, or various combinations thereof. Figure 8 shows a program in a high level language 802 may be compiled using an x86 compiler 804 to generate x86 binary code 806 that may be natively executed by a processor with at least one x86 instruction set core 816.

The processor with at least one x86 instruction set core 816 represents any processor that can perform substantially the same functions as an Intel® processor with at least one x86 instruction set core by compatibly executing or otherwise processing (1) a substantial portion of the instruction set of the Intel® x86 instruction set core or (2) object code versions of applications or other software targeted to run on an Intel® processor with at least one x86 instruction set core, in order to achieve substantially the same result as an Intel® processor with at least one x86 instruction set core. The x86 compiler 804 represents a compiler that is operable to generate x86 binary code 806 (e.g., object code) that can, with or without additional linkage processing, be executed on the processor with at least one x86 instruction set core 816. Similarly, Figure 8 shows the program in the high level language 802 may be compiled using an alternative instruction set compiler 808 to generate alternative instruction set binary code 810 that may be natively executed by a processor without at least one x86 instruction set core 814 (e.g., a processor with cores that execute the MIPS instruction set of MIPS Technologies of Sunnyvale, CA and/or that execute the ARM instruction set of ARM Holdings of Cambridge, England).

The instruction converter 812 is used to convert the x86 binary code 806 into code that may be natively executed by the processor without an x86 instruction set core 814. This converted code is not likely to be the same as the alternative instruction set binary code 810 because an instruction converter capable of this is difficult to make; however, the converted code will accomplish the general operation and be made up of instructions from the alternative instruction set. Thus, the instruction converter 812 represents software, firmware, hardware, or a combination thereof that, through emulation, simulation or any other process, allows a processor or other electronic device that does not have an x86 instruction set processor or core to execute the x86 binary code 806.

### Runtime Determination of Data Dependencies

### Runtime Memory Conflict Detection

Converting a scalar process to a vector process typically transforms a longer sequence of ordered, scalar operations results in a shorter sequence of parallel, vector operations. Each parallel operation corresponds to a number of scalar operations, where the number may correspond to a vector length of the system performing the operations.

Conflicts may be detected for an unordered single index, an ordered single index and/or ordered pairs of indices. Conflicts may be further detected for read-after-write dependencies. Conflict detection is configured to identify operations (i.e., iterations) in a sequence of iterations that may not be done in parallel.

As used herein, "index" corresponds to an address of an element included in an array. For example, the array may be specified by, among other things, a base address. An element in the array may be pointed to by the index. The address of the element may then include the base address and the index (i.e., offset).

When vectorizing a scalar process, data that is to be operated on by the process may be stored in an array and the scalar process may be configured to operate on an element of the array, one element at a time. For example, the scalar process may include a loop where one element is operated on each pass (i.e., iteration) through the loop. Depending on the process, an element may be operated on once, multiple times or not operated on.

Program vectorization techniques should be aware of program control and data dependencies when vectorizing scalar processes. Some programs contain data dependencies that are known only at runtime. **Table 1** below shows exemplary program code having runtime dependencies.

**Table 1: Example Program Code**

| | |
|---|---|
| (1) | for(k = 0; k < 8; k++) {// iterations from 0 to 7 |
| (2) | A[Y[k] ] = A[X[k] ] + 1; |
| (3) | } |

**Table 1** shows example program code including a loop including an assignment between elements of array A. The look contains a data dependence in which array A relies on the runtime value of array X and array Y. To vectorize the loop within the exemplary program code, runtime conflict detection is needed from array X to array Y. Exemplary arrays X and Y are shown in Table 2 below.

**Table 2: Example Vectors**

| | |
|---|---|
| (4) | X[] = [1, 6, 4, 1, 2, 3, 1, 5]; |
| (5) | Y[] = [2, 1, 1, 1, 3, 6, 2, 3]; |

**Table 2** above illustrates vector elements as C language arrays. The arrays are zero indexed from left to right. Each index of the exemplary vectors is associated with an iteration of the loop in the program code of Table 1. In this sequence a conflict exists where iteration 3 reads A[1] and iteration 1 writes A[1]. In other words, X[3] = Y[1] = 1 (note that iteration number starts from 0). Thus, there is at least one conflict from X[3] to Y[1]. Each runtime conflict from X[i] to Y[j] implies a runtime dependency from A[X[k]] to A[Y[k]] that prevents traditional vectorization.

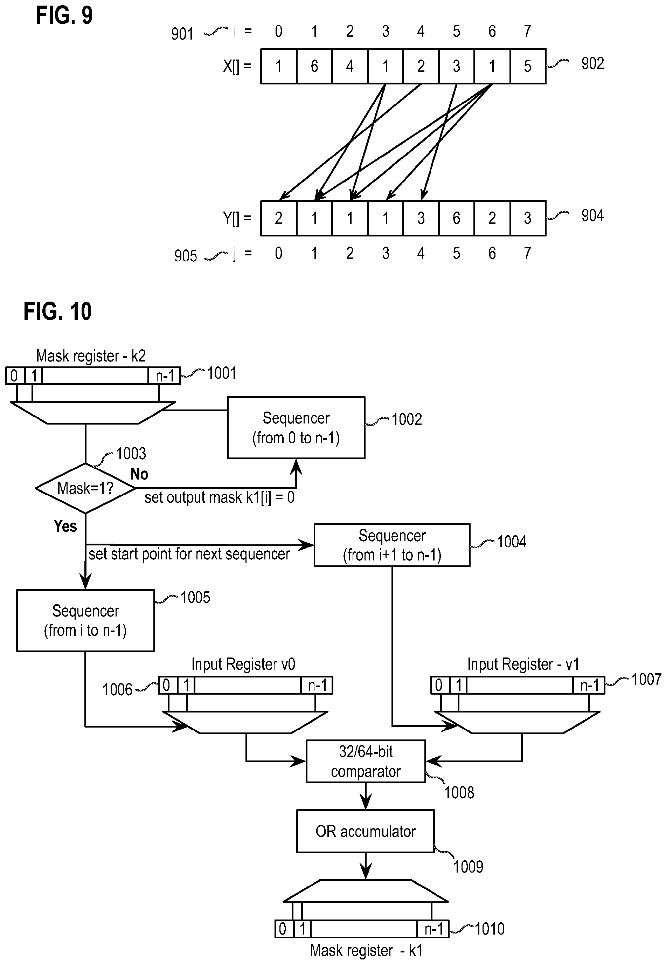

**Figure 9** is a block diagram showing runtime data conflicts between exemplary vectors. Exemplary vectors X 902 and Y 904 of **Table 2** are shown with indices i 901 and j 905. A conflict is determined from X[i] to Y[j] if X[i] = Y[j] and j < i. In addition to conflict X[3]=Y[1]=1, conflict X[3]=Y[2]=1 also exists. Additionally, X[4]=Y[0]=2; X[5]=Y[4]=3; and X[6]=Y[3]=Y[2]=Y[1]=1. Due to the conflicts, traditional loop vectorization techniques cannot vectorize all iterations of the exemplary program code of **Table 1.** However, it is possible to vectorize loop iterations within a range of [0, 2], then vectorize loop iterations within the range [3, 4], and finally vectorize loop iterations in the range [5, 7]. In general, it is possible to partition the loop iterations into ranges such that there is no conflict within a specific loop iteration range (e.g., for loop iteration range [M, N], there is no X[i] = Y[j], M<= j < i <= N). It is then possible to run the loop iterations in each range in a vector guarded by bit-masks without violating data dependences.

For example, it is possible to first run loop iterations in range [0, 2] guarded by bit-mask 0b11100000, then loop iterations in range [3, 4] guarded by bit-mask 00011000 and then loop iterations in range [5, 7] guarded by bit-mask 0b00000111. Note that, in one embodiment, it is acceptable to allow the write of the same array element (e.g., A[1]) in iteration 1 and 2 (e.g., Y[1]=Y[2]=1) in a vector because the vector write logic is configured to serialize consecutive writes to the same memory location.

**Figure 10** is a block diagram of logic to compute a stop bit vector, according to an embodiment. To compute a stop bit vector in one embodiment, logic is configured to can scan each element of X[i] to determine if the element conflicts with an earlier (e.g., lower index) element of Y[j] (e.g., X[i] = Y[j], j < i) and set the stop bit M[i] to 0 or 1. Input mask register k2 1001 acts as a write mask to control whether the current active element is being used for comparison. Sequencer 1002 sequences through the bit positions of input mask register k2 1001. If the value in the current bit position of mask register k2 is a 0, determined at 1003, then the corresponding bit position in output register k1 1010 is set to 0.

In one embodiment, if the value in the current bit position of mask register k2 is a 1, then this determines a start point for the operation of sequencers 1004 and 1005. Comparator 1008 compares each element i+1 of vO with all preceding elements i, i-1, i-2, etc, of vl and the results of the comparisons are ORed together with OR accumulator 1009. The mask register k1 is then updated accordingly.

In one embodiment not every conflict from X[i] to Y[j] needs to set a stop bit M[i]. For example, given exemplary vectors X and Y in **Table 2,** there is a conflict from X[3] to Y[1] (i.e. X[3] = Y[1] = 1) and a stop bit is set in M[3]. Thus, it is not necessary to consider the conflict from X[4] to Y[0], where X[4] = Y[0] = 2 and set stop bit M[4], as stop bit M[3] already makes sure iteration 0 and iteration 4 will be in different loop iteration ranges. In general, if stop bits M[i1] are set due to a conflict from X[i1] to Y[j1], then the conflict logic is not required to consider all conflicts from X[i2] to Y[j2], if j2 < i1 < i2. In other words, where the logic checks for conflicts from X[i] to Y[j] for j < i, the logic can ignore a conflict to Y[j] for all j < the last stop bit set. An exemplary algorithm for computing the conflict vector M is shown in **Table 3** below.

**Table 3: Example Stop Bit Algorithm**

| | |
|---|---|
| (6) | M[]={0,0,0,0,0,0,0,0}//initialize all M to be 0 |
| (7) | last_stop_bit = 0; |
| (8) | for(i = 1; i < 8; i++) { // scan element of X[i] for stop bit. |
| (9) | for(j = last_stop_bit; j < i; j++) { // check conflict from X[i] to Y[j], j < i□ |
| | |
| (10) | if(X[i] == Y[j]) { // find a stop bit M[i] |
| (11) | M[i] = 1; |
| (12) | last_stop_bit = i; |
| (13) | break; |
| (14) | } |
| (15) | } |
| (16) | } |

Given exemplary input vectors X and Y of **Table 2** above, the logic produces stop bit vector M as in Table 4 below:

**Table 4: Example Stop Bit Vector**

| | |
|---|---|
| (17) | M[] = [0, 0, 0, 1, 0, 1, 0, 0] |

In the exemplary stop bit vector, each range stops before a bit "1" (e.g., bits having a value of "1" indicate the beginning of a new loop partition). Thus, vector M of Table 3 indicates that loop iterations are to be partitioned into three loop iteration ranges: [0, 2], [3, 4] and [5, 7]. In one implementation, bit manipulation instructions are provided to a processor to generate corresponding bit-masks from M to determine the the loop iteration ranges for bit-masked vector operations. For example, bit mask 0b11100000 is generated for a first vector operation to vectorize loop iteration range [0, 2]. Bit mask 0b00011000 is used for a second vector operation to vectorize loop iteration range [3, 4]. Bit mask 0b00000111 is generated to vectorize loop iteration range [5, 7]).

### Vector Based Conflict Determination

An alternate implementation utilizes processor logic to compute a vector Z, where each bit represents whether or not a conflict exists between each element of a first vector and each other element of a second vector. For example, given exemplary input vectors X and Y of Table 2, having the conflicts illustrated in **Figure 9****,** a Z vector is computed as in **Table 5.**

**Table 5: Example Conflict Vector (Z)**

| | |
|---|---|
| (17) | [00000000,00000000,00000000,0**11**00000,10000000,0000**1**000,0**111**0000,00000000] |

The exemplary conflict vector Z of **Table 5** illustrates, for example, the conflict from X[3] to Y[1] and Y[2] as a "1" bit at positions 1 and 2 of Z[3]=01100000 (bit position is from left to right).

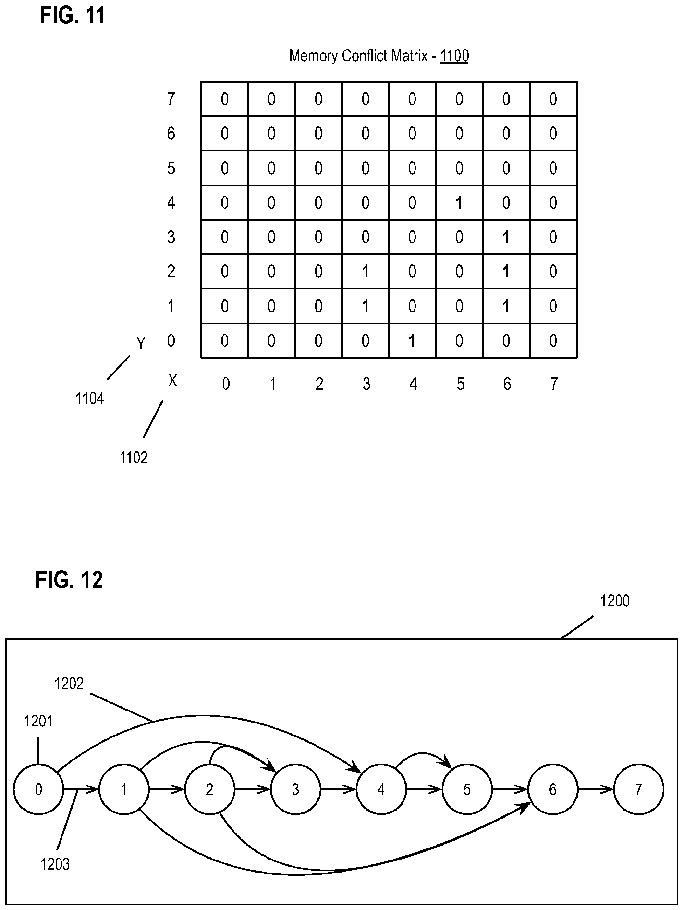

**Figure 11** is a matrix representation of the exemplary conflict vector Z. The exemplary X vector of Table 2 is shown as an X-axis 1102. The exemplary Y vector of Table 2 is shown as a Y-axis 1104. Each volume of the memory conflict matrix 1101 illustrates a vector element of the exemplary conflict vector of Table 5.

While a processor vector unit may compute the Z conflict vector efficiently, the Z vector must be post processed before it may be used to partition the loop into iteration ranges (e.g., [0, 2], [3, 4] and [5, 7] for exemplary vectors X and Y). The post processing is performed to ensure proper and complete conflict detector for partial, ranged based loop vectorization.

For example, the original Z conflict vector appears to indicate that iterations 0, 1, 2 and 7 may be run as vector operations, as there is no conflict from X[0], X[1], X[2] and X[7] to any Y element, as Z[0], Z[1], Z[2] and Z[7] are zero. However, proper memory ordering requires that the write of A[3] at iteration 7 (e.g., Y[7] = 3) follows the write of A[3] at iteration 4 (e.g., Y[4] =3) because, in one embodiment, writes to the same memory address are required be strictly ordered.

One solution is to process Z sequentially for elements with all zeros to determine the first loop iteration range [0, 2]. For exemplary conflict vector Z, this indicates elements 0, 1, and 2. After executing the loop iterations in range [0, 2] as a vector, operation, any future conflicts related to Y[0, 2] may be ignored. To mask off the corresponding conflicts represented in vector Z, a bit mask is generated (e.g., 0b000111111) with bits in range [0, 2] being 0 and others being 1. The bit mask may be simultaneously applied to all elements of Z as a vector operation (e.g., Z[] = Z[] & 00011111) to remove all conflicts related to Y[0, 2]. The resulting new conflicts results in a Z' (e.g., Z-prime) vector as shown in Table 6.

**Table 6: Example Processed Conflict Vector (Z')**

| | |
|---|---|
| (18) | [00000000,00000000,00000000,00000000,00000000,0000**1**000,000**1**0000,00000000] |

Considering that range [0,2] has been processed, the resulting vector applies to range [3,7]. However, the only vector elements in the range [3,7] containing all zero bits are elements 3 and 4. This indicates a vector operation may be safely performed for loop iterations in the range [3,4]. Once the vector operation for loop iterations in the range [3,4] is performed, conflicts related to Y[3,4] are no longer relevant. Thus, a bit-mask of 0b111**00**111 is applied to each element of Z', resulting in a Z" (e.g., Z-double prime) vector as shown in **Table 7.**

**Table 7 Example Processed Conflict Vector (Z")**

| | |
|---|---|
| (19) | [00000000,00000000,00000000,00000000,00000000,00000000,00000000,00000000] |

The elements of Z" in range [5, 7] are all zeros. Thus, the remaining iterations of the loop may be safely vectorized and the processing logic may proceed to process loop iterations in range [5, 7] in a vector single vector operation.

### Fast Vector Based Conflict Determination

In one embodiment, fast vector based conflict determination is provided by several additional instruction. The conflict determination performs, within a single instruction, runtime, vector based memory conflict detection without requiring additional post-processing to resolve strict memory ordering issues.

In one embodiment, a P=VCONFLICTP(X, Y) instruction processes two input vectors to compute a partition vector P. Given input vectors X and Y as in **Table 2,** a resulting partition vector P is produces, as shown in **Table 8** below.

**Table 8: Example Partition Vector**

| | |
|---|---|
| (20) | P[] = {0, 0, 0, 1, 1, 2, 2, 2} |

In the exemplary portion vector of **Table 8,** "0" indicates that the loop iteration belongs to the loop iteration range 0, (i.e. [0, 2]), "1" indicates that the loop iteration belongs the loop iteration range 1, (i.e. [3, 4]) and "2" indicates that the loop iteration belongs to the loop iteration range 2 (i.e. [5, 7]).

Thus, partition vector P provides a different representation of the same loop iteration ranges as stop-bit vector M. It is also possible to visualize view P[i] as the count of stop bits M in iteration range (0, i] (note that, in one embodiment, M[0] is always 0). This representation allows fast bit-mask generation without the need of a sequential scan of the bits of the stop-bits vector M, which results in a performance improvement over the stop bits implementation in some embodiments.

In one embodiment, bit-masks for each loop iteration range are generated from P using a vector comparison operation. In one embodiment, the vector comparison operation generates separate bit masks for each iteration partition based on a grouping of vector values. Exemplary vector comparisons and resulting bitmaps are shown in **Table 9.**

**Table 9: Example Vector Comparison**

| | |
|---|---|
| (21) | P[] == 0 → 11100000 // bit-mask for loop iteration range 0, i.e. [0, 2] |
| (22) | P[] == 1 → 00011000 // bit-mask for loop iteration range 1, i.e. [3, 4] |
| (23) | P[] == 2 →00000111 // bit-mask for loop iteration range 2, i.e. [5, 7] |

Computation of the partition vector may be shown using a directed acyclic graph (DAG) illustrating conflicts between memory locations. **Figure 12** is an exemplary DAG for use in determining a path vector, according to an embodiment. The directed acyclic graph (DAG) 1200 illustrates conflicts between memory locations as determined by exemplary vectors X and Y as in **Table 2.** The DAG 1200 includes a node (e.g., 1201) for each loop iteration (e.g., nodes 0-7) and an edge j →i (e.g., 1202, 1203) between each pair of iterations j < i. Each edge has a length such that if X[i] conflicts to Y[j], the length of edge j →i is 1 (e.g., length(j, i) = 1 as with edge 1202). Otherwise, the length of edge j →i is 0 (e.g., length(j, i) = 0 as with edge 1203).

In view of the DAG 1200 of **Figure 12****,** the following observations may be made: 1) an edge j →i with length 1 indicates that at least 1 stop bit will be used in iteration range (j, i] due to a conflict between X[i] and Y[j]; 2) a path from node 0 to i with length p indicates that at least p stop bits are to be used in iteration range (0, i]; 3) the longest path from 0 to i gives the minimal count of stop bits to use in iteration range (0, i]. The longest path can be defined recursively, where P(0) = 0 and P(i) = max_j { P(j) + length(j, i) }. An exemplary algorithm to compute a vector path is shown in **Table 10.**

**Table 10: Example Vector Path Algorithm**

| | |
|---|---|
| (24) | P[]={0,0,0,0,0,0,0,0} //initialize all P to 0 |
| (25) | for(j = 0; j < 7; j++) { |
| (26) | for(i = j + 1; i < 8; i++) { |
| (27) | length[j][i] = (X[i] == Y[j]); // 0 or 1▪ |
| (28) | P[i] = max( P[i], P[j] + length[j][i]); |
| (29) | } |
| (30) | } |

The worst-case complexity of the vector path algorithm of Table 10 is same as the worst-case complexity of the stop bit algorithm of Table 3. However, the vector path algorithm 2, avoids data dependence across the inner loop iterations (note for inner loop, i > j), and can be computed more efficiently by a processor vector unit relative to the stop bit algorithm of Table 3.

In one embodiment, an additional instruction is provided to compute R=VCONFLICTR(X, Y), which is an additional representation of the loop iteration partition. This instruction uses an additionally optimized algorithm that avoids the use of the "max" operation, which may be expensive to implement in some processors. R represents the loop iteration partition as R = 2^(P+1)-1 using the following bit representations:

**Table 11: Power-based Partition Representation**

| | |
|---|---|
| (31) | P = 0, bit representation of R = 2^(P+1) - 1 is "1" |
| (32) | P = 1, bit representation of R = 2^(P+1) - 1 is "11" |
| (33) | P = 2, bit representation of R = 2^(P+1) - 1 is "111" |
| (34) | P = 3, bit representation of R = 2^(P+1) - 1 is "1111" |
| (35) | P = 4, bit representation of R = 2^(P+1) - 1 is "11111" |
| (36) | P = 5, bit representation of R = 2^(P+1) - 1 is "111111" |
| (37) | P = 6, bit representation of R = 2^(P+1) - 1 is "1111111" |
| (38) | P = 7, bit representation of R = 2^(P+1) - 1 is "11111111" |

To compute R, logic to compute max(P[i], P[j] + length[j][i]) may be replaced with logic to compute (R[i] | R[j] << length[j][i]) (where "<<" is a "left-shift" operation and "|" is a "bitwise or" operation). R may be computed with simplified hardware logic in relation to P using an exemplary algorithm as presented in **Table 12.**

**Table 12: Example Power-based Partition Vector Algorithm**

| | |
|---|---|
| (39) | R[]={1,1,1,1,1,1,1,1} // initialize all R to be 1 |
| (40) | for(j = 0; j < 7; j++) { |
| (41) | for(i = j + 1; i < 8; i++) { |
| (42) | length [j][i] = (X[i] == Y[j]); // 0 or 1□ |
| (43) | R[i] = R[i] \| (R[j] << length[j][i]); // shift by 0 or 1 |
| (44) | } |
| (45) | } |

Where the relatively more expensive "+" operation is replaced by the cheaper "<<" operation and the expensive "max" operation is replaced by the cheaper "|" operation. Thus, with vectors X and Y as in **Table 2,** computed by the Power Partition Vector algorithm of **Table 12,** a vector may be generated as shown in **Table 13.**

**Table 13: Example Power-based Partition Vector.**

| | |
|---|---|
| (46) | R[] = {"1", "1", "1", "11", "11", "111", "111", "111"} // bit representation of R |

In one embodiment, bit-masks for loop iteration ranges are generated from R using a vector compare operation, as shown in **Table 14**.

**Table 14: Bit-mask Generation from R vector**

| | |
|---|---|
| (47) | R[] == "1" → 11100000 // bit-mask for loop iteration range 0, e.g., [0, 2] |
| (48) | R[] == "11" →00011000 // bit mask for loop iteration range 1, e.g., [3, 4] |
| (49) | R[] == "111" →00000111 // bit mask for loop iteration range 2, e.g., [5,7] |

A vector compare may be used to generate separate bit masks for each group of vectorized loop iterations based on the elements of the power-based partition vector. A first bit map may be generated that groups all iterations in range 0 (e.g., elements [0, 2]), groups a second set of iterations in loop iteration range 1 (e.g., [3, 4]), and a groups third set of iterations in range 2 (e.g., [5,7]).

In an alternate embodiment, bit-masks for loop iteration ranges are generated from R as shown in **Table 15.**

**Table 15: Alternate Bit-mask Generation from R vector**

| | |
|---|---|
| (47) | R[] == 1 →11100000 // bit-mask for loop iteration range 0, i.e. [0, 2] ▪ |
| (48) | R[] = R[] >> 1 // after shift, R[] = ["0", "0", "0", "1", "1", "11", "11", "11 "] |
| (49) | R[] == 1 →00011000 // bit mask for loop iteration range 1, i.e. [3, 4] |
| (50) | R[] = R[] >> 1 // after right shift, R[] = ["0", "0" , "0", "0", "0", "1", "1", "1"] |
| (51) | R[] == 1 →00000111 // bit mask for loop iteration range 2, i.e. [5,7] |

As shown in **Table 15,** in one embodiment, logic is further simplified by the repeated application of a single bit vector compare followed by a vector right shift (e.g., right shift all vector elements). For example, at line (47) a vector compare sets a bit in an initialized bit mask for corresponding elements in R equal to 1 and performs a vector right shift on R to perform a right shift on each element of R. The exemplary resulting vector is shown at line (48), where vector elements equal to '1' are shifted to '0', vector elements equal to '11' are shifted to '1', and vector elements '111' are shifted to '11'. This sequence may be repeated (e.g., for range 1 and range 2) until all element of R are equal to '0'.

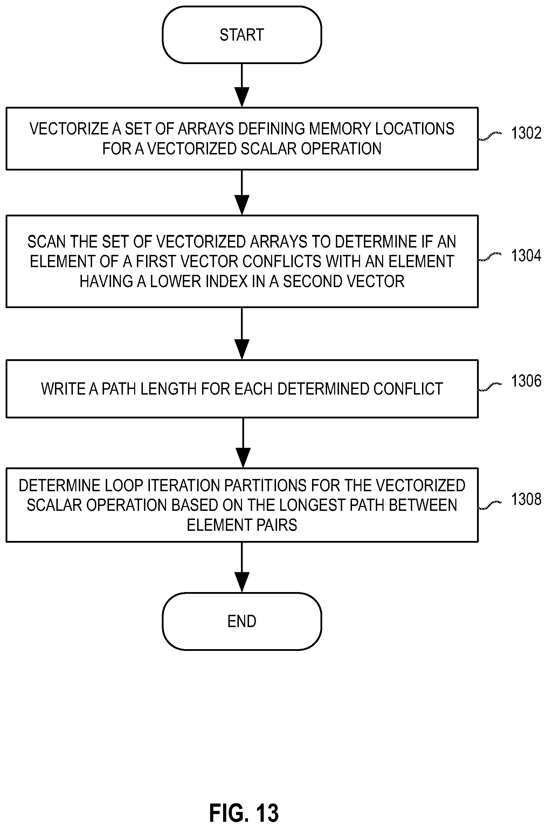

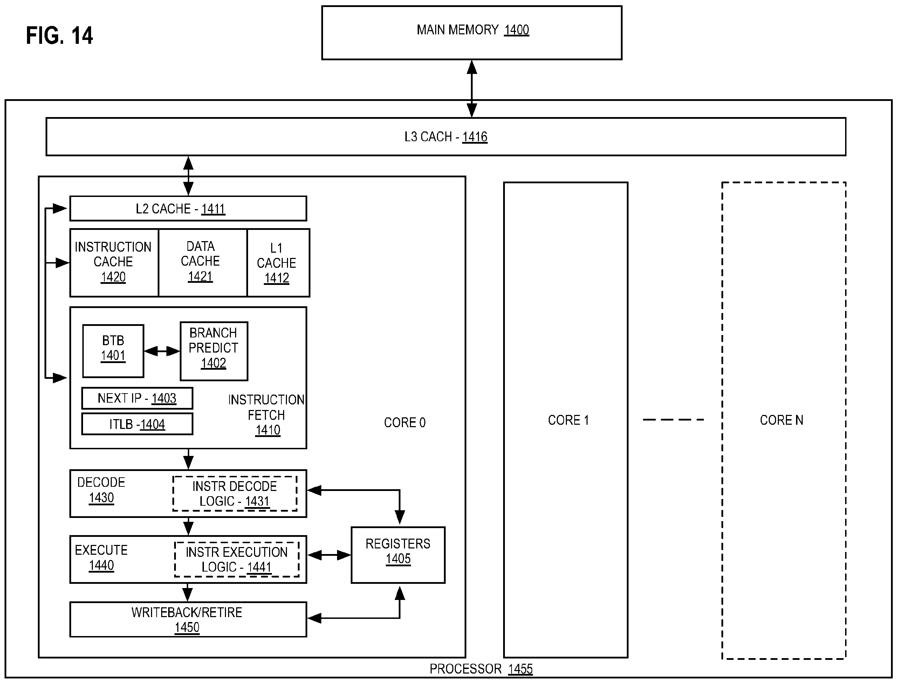

While three iteration groups have been shown for the exemplary vectors and conflicts used to illustrate the various embodiments, the number of groups is determined based on the number of conflicts between the memory addresses or array elements determined by the vectors. It will be also understood that embodiments are generally applicable to detecting memory conflicts during operations such a loop vectorization. Exemplary logic to implement VCONFLICTP and VCONFLICTR instructions as described herein are shown in **Figure 13** and **Figure 14** below.

**Figure 13** is a flow diagram of logic to determine loop iteration partitions, according to an embodiment. In one embodiment compiler or processor logic includes logic to vectorize a set of arrays defining memory locations for a vectorized scalar operation (e.g., a vectorized loop) as shown at 1302. At block 1304, the logic can scan the set of vectorized arrays to determine if an element of a first vector conflicts with a lower index element of a second vector. At block 1306, the logic is further to write a path length (e.g., in a path matrix, path data structure, or set of registers configured to store path data) for each determined conflict. At block 1308, the logic is further to determine iteration partitions for the vectorized scalar operation based on the longest path between element pairs in the vectors. The loop iteration partitions may be determined, for example, according to a vector path algorithm or a power-based partition vector algorithm as described herein, although other specific implementations may also be performed in various embodiments.

### Exemplary Processor Implementation

**Figure 14** is a block diagram of a processing system including logic to perform dynamic memory conflict detection, according to an embodiment. The exemplary processing system includes a processor 1455 coupled to main memory 1400. The processor 1455 includes a decode unit 1430 with decode logic 1431 for decoding the dynamic memory conflict instructions. Additionally, a processor execution engine unit 1440 includes additional execution logic 1441 for executing dynamic memory conflict detection instructions. Registers 1405 provide register storage for operands, control data and other types of data as the execution unit 1440 executes the instruction stream.

The details of a single processor core ("Core 0") are illustrated in **Figure 14** for simplicity. It will be understood, however, that each core shown in **Figure 14** may have the same set of logic as Core 0. As illustrated, each core may also include a dedicated Level 1 (L1) cache 1412 and Level 2 (L2) cache 1411 for caching instructions and data according to a specified cache management policy. The L1 cache 1411 includes a separate instruction cache 1420 for storing instructions and a separate data cache 1421 for storing data. The instructions and data stored within the various processor caches are managed at the granularity of cache lines, which may be a fixed size (e.g., 64, 128, 512 Bytes in length). Each core of this exemplary embodiment has an instruction fetch unit 1410 for fetching instructions from main memory 1400 and/or a shared Level 3 (L3) cache 1416; a decode unit 1430 for decoding the instructions; an execution unit 1440 for executing the instructions; and a write back/retire unit 1450 for retiring the instructions and writing back the results.

The instruction fetch unit 1410 includes various well known components including a next instruction pointer 1403 for storing the address of the next instruction to be fetched from memory 1400 (or one of the caches); an instruction translation look-aside buffer (ITLB) 1404 for storing a map of recently used virtual-to-physical instruction addresses to improve the speed of address translation; a branch prediction unit 1402 for speculatively predicting instruction branch addresses; and branch target buffers (BTBs) 1401 for storing branch addresses and target addresses. Once fetched, instructions are then streamed to the remaining stages of the instruction pipeline including the decode unit 1430, the execution unit 1440, and the write back/retire unit 1450.

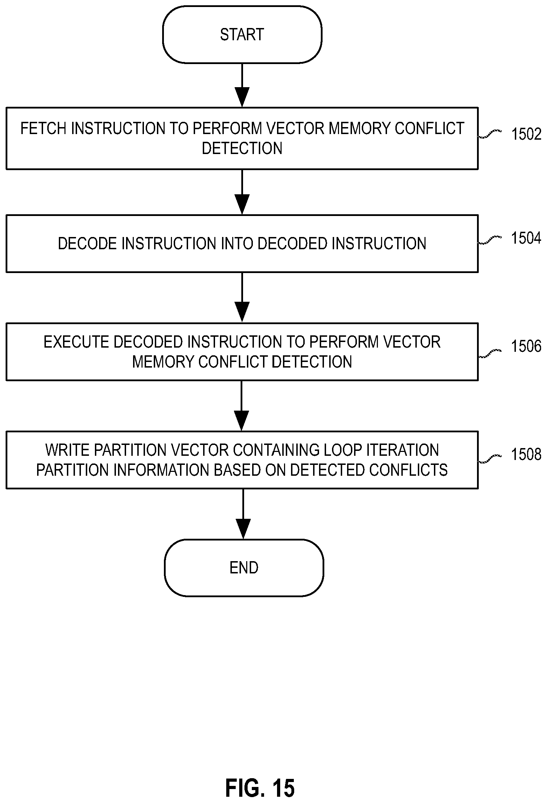

**Figure 15** is a flow diagram of logic to perform dynamic memory conflict detection, according to an embodiment. In one embodiment a processor includes logic to fetch an instruction to perform vector memory conflict detection, as shown at 1502. At 1504, the logic is further to the decode instruction into decoded instruction. At 1506, the logic is further to execute the decoded instruction to perform vector memory conflict detection. At 1508, the logic is further to a write partition vector containing loop iteration partition information based on detected conflicts. In one embodiment the partition vector is a partition vector P as shown in **Table 8.** In one embodiment the partition vector is a power-based partition vector R as shown in **Table 13.**

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

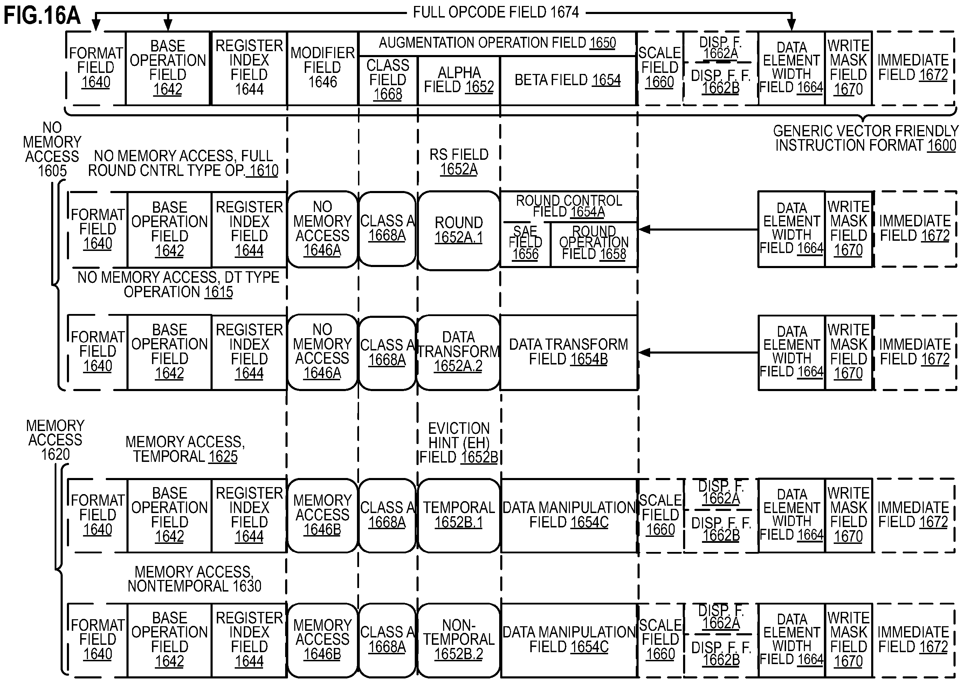

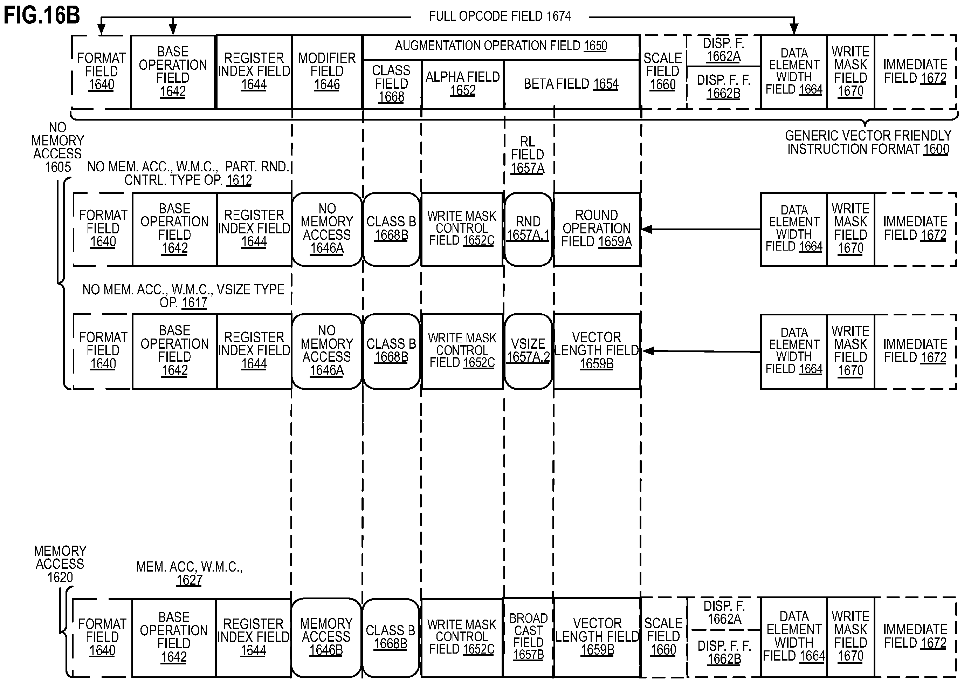

**Figures 16A-16B** are block diagrams illustrating a generic vector friendly instruction format and instruction templates thereof according to an embodiment. **Figure 16A** is a block diagram illustrating a generic vector friendly instruction format and class A instruction templates thereof according to an embodiment; while **Figure 16B** is a block diagram illustrating the generic vector friendly instruction format and class B instruction templates thereof according to an embodiment. Specifically, a generic vector friendly instruction format 1600 for which are defined class A and class B instruction templates, both of which include no memory access 1605 instruction templates and memory access 1620 instruction templates. The term generic in the context of the vector friendly instruction format refers to the instruction format not being tied to any specific instruction set.

Embodiments will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes). However, alternate embodiments support more, less and/or different vector operand sizes (e.g., 256 byte vector operands) with more, less, or different data element widths (e.g., 128 bit (16 byte) data element widths).

The class A instruction templates in **Figure 16A** include: 1) within the no memory access 1605 instruction templates there is shown a no memory access, full round control type operation 1610 instruction template and a no memory access, data transform type operation 1615 instruction template; and 2) within the memory access 1620 instruction templates there is shown a memory access, temporal 1625 instruction template and a memory access, non-temporal 1630 instruction template. The class B instruction templates in **Figure 16B** include: 1) within the no memory access 1605 instruction templates there is shown a no memory access, write mask control, partial round control type operation 1612 instruction template and a no memory access, write mask control, vsize type operation 1617 instruction template; and 2) within the memory access 1620 instruction templates there is shown a memory access, write mask control 1627 instruction template.

The generic vector friendly instruction format 1600 includes the following fields listed below in the order illustrated in **Figures 16A-16B****.**

Format field 1640 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 1642 - its content distinguishes different base operations.

Register index field 1644 - its content, directly or through address generation, specifies the locations of the source and destination operands, be they in registers or in memory. These include a sufficient number of bits to select N registers from a PxQ (e.g. 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 1646 - its content distinguishes occurrences of instructions in the generic vector instruction format that specify memory access from those that do not; that is, between no memory access 1605 instruction templates and memory access 1620 instruction templates. Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 1650 - its content distinguishes which one of a variety of different operations to be performed in addition to the base operation. This field is context specific. In one embodiment of the invention, this field is divided into a class field 1668, an alpha field 1652, and a beta field 1654. The augmentation operation field 1650 allows common groups of operations to be performed in a single instruction rather than 2, 3, or 4 instructions.

Scale field 1660 - its content allows for the scaling of the index field's content for memory address generation (e.g., for address generation that uses 2^{scale} * index + base).

Displacement Field 1662A- its content is used as part of memory address generation (e.g., for address generation that uses 2^{scale} * index + base + displacement).

Displacement Factor Field 1662B (note that the juxtaposition of displacement field 1662A directly over displacement factor field 1662B indicates one or the other is used) - its content is used as part of address generation; it specifies a displacement factor that is to be scaled by the size of a memory access (N) - where N is the number of bytes in the memory access (e.g., for address generation that uses 2^{scale} * index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 1674 (described later herein) and the data manipulation field 1654C. The displacement field 1662A and the displacement factor field 1662B are optional in the sense that they are not used for the no memory access 1605 instruction templates and/or different embodiments may implement only one or none of the two.

Data element width field 1664 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 1670 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 1670 allows for partial vector operations, including loads, stores, arithmetic, logical, etc. While embodiments are described in which the write mask field's 1670 content selects one of a number of write mask registers that contains the write mask to be used (and thus the write mask field's 1670 content indirectly identifies that masking to be performed), alternative embodiments instead or additional allow the mask write field's 1670 content to directly specify the masking to be performed.

Immediate field 1672 - its content allows for the specification of an immediate. This field is optional in the sense that is it not present in an implementation of the generic vector friendly format that does not support immediate and it is not present in instructions that do not use an immediate.

Class field 1668 - its content distinguishes between different classes of instructions. With reference to **Figures 16A-B****,** the contents of this field select between class A and class B instructions. In **Figures 16A-B****,** rounded corner squares are used to indicate a specific value is present in a field (e.g., class A 1668A and class B 1668B for the class field 1668 respectively in **Figures 16A-B****).**

### Instruction Templates of Class A

In the case of the non-memory access 1605 instruction templates of class A, the alpha field 1652 is interpreted as an RS field 1652A, whose content distinguishes which one of the different augmentation operation types are to be performed (e.g., round 1652A.1 and data transform 1652A.2 are respectively specified for the no memory access, round type operation 1610 and the no memory access, data transform type operation 1615 instruction templates), while the beta field 1654 distinguishes which of the operations of the specified type is to be performed. In the no memory access 1605 instruction templates, the scale field 1660, the displacement field 1662A, and the displacement scale filed 1662B are not present.

### No-Memory Access Instruction Templates - Full Round Control Type Operation

In the no memory access full round control type operation 1610 instruction template, the beta field 1654 is interpreted as a round control field 1654A, whose content(s) provide static rounding. While in the described embodiments the round control field 1654A includes a suppress all floating point exceptions (SAE) field 1656 and a round operation control field 1658, alternative embodiments may support may encode both these concepts into the same field or only have one or the other of these concepts/fields (e.g., may have only the round operation control field 1658).

SAE field 1656 - its content distinguishes whether or not to disable the exception event reporting; when the SAE field's 1656 content indicates suppression is enabled, a given instruction does not report any kind of floating-point exception flag and does not raise any floating point exception handler.

Round operation control field 1658 - its content distinguishes which one of a group of rounding operations to perform (e.g., Round-up, Round-down, Round-towards-zero and Round-to-nearest). Thus, the round operation control field 1658 allows for the changing of the rounding mode on a per instruction basis. In one embodiment of the invention where a processor includes a control register for specifying rounding modes, the round operation control field's 1650 content overrides that register value.

### No Memory Access Instruction Templates - Data Transform Type Operation

In the no memory access data transform type operation 1615 instruction template, the beta field 1654 is interpreted as a data transform field 1654B, whose content distinguishes which one of a number of data transforms is to be performed (e.g., no data transform, swizzle, broadcast).

In the case of a memory access 1620 instruction template of class A, the alpha field 1652 is interpreted as an eviction hint field 1652B, whose content distinguishes which one of the eviction hints is to be used (in **Figure 16A****,** temporal 1652B. 1 and non-temporal 1652B.2 are respectively specified for the memory access, temporal 1625 instruction template and the memory access, non-temporal 1630 instruction template), while the beta field 1654 is interpreted as a data manipulation field 1654C, whose content distinguishes which one of a number of data manipulation operations (also known as primitives) is to be performed (e.g., no manipulation; broadcast; up conversion of a source; and down conversion of a destination). The memory access 1620 instruction templates include the scale field 1660, and optionally the displacement field 1662A or the displacement scale field 1662B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

### Memory Access Instruction Templates - Temporal

Temporal data is data likely to be reused soon enough to benefit from caching. This is, however, a hint, and different processors may implement it in different ways, including ignoring the hint entirely.

### Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

### Instruction Templates of Class B

In the case of the instruction templates of class B, the alpha field 1652 is interpreted as a write mask control (Z) field 1652C, whose content distinguishes whether the write masking controlled by the write mask field 1670 should be a merging or a zeroing.

In the case of the non-memory access 1605 instruction templates of class B, part of the beta field 1654 is interpreted as an RL field 1657A, whose content distinguishes which one of the different augmentation operation types are to be performed (e.g., round 1657A.1 and vector length (VSIZE) 1657A.2 are respectively specified for the no memory access, write mask control, partial round control type operation 1612 instruction template and the no memory access, write mask control, VSIZE type operation 1617 instruction template), while the rest of the beta field 1654 distinguishes which of the operations of the specified type is to be performed. In the no memory access 1605 instruction templates, the scale field 1660, the displacement field 1662A, and the displacement scale filed 1662B are not present.

In the no memory access, write mask control, partial round control type operation 1610 instruction template, the rest of the beta field 1654 is interpreted as a round operation field 1659A and exception event reporting is disabled (a given instruction does not report any kind of floating-point exception flag and does not raise any floating point exception handler).

Round operation control field 1659A - just as round operation control field 1658, its content distinguishes which one of a group of rounding operations to perform (e.g., Round-up, Round-down, Round-towards-zero and Round-to-nearest). Thus, the round operation control field 1659A allows for the changing of the rounding mode on a per instruction basis. In one embodiment of the invention where a processor includes a control register for specifying rounding modes, the round operation control field's 1650 content overrides that register value.

In the no memory access, write mask control, VSIZE type operation 1617 instruction template, the rest of the beta field 1654 is interpreted as a vector length field 1659B, whose content distinguishes which one of a number of data vector lengths is to be performed on (e.g., 128, 256, or 512 byte).

In the case of a memory access 1620 instruction template of class B, part of the beta field 1654 is interpreted as a broadcast field 1657B, whose content distinguishes whether or not the broadcast type data manipulation operation is to be performed, while the rest of the beta field 1654 is interpreted the vector length field 1659B. The memory access 1620 instruction templates include the scale field 1660, and optionally the displacement field 1662A or the displacement scale field 1662B.

With regard to the generic vector friendly instruction format 1600, a full opcode field 1674 is shown including the format field 1640, the base operation field 1642, and the data element width field 1664. While one embodiment is shown where the full opcode field 1674 includes all of these fields, the full opcode field 1674 includes less than all of these fields in embodiments that do not support all of them. The full opcode field 1674 provides the operation code (opcode).

The augmentation operation field 1650, the data element width field 1664, and the write mask field 1670 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the invention). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

### Exemplary Specific Vector Friendly Instruction Format

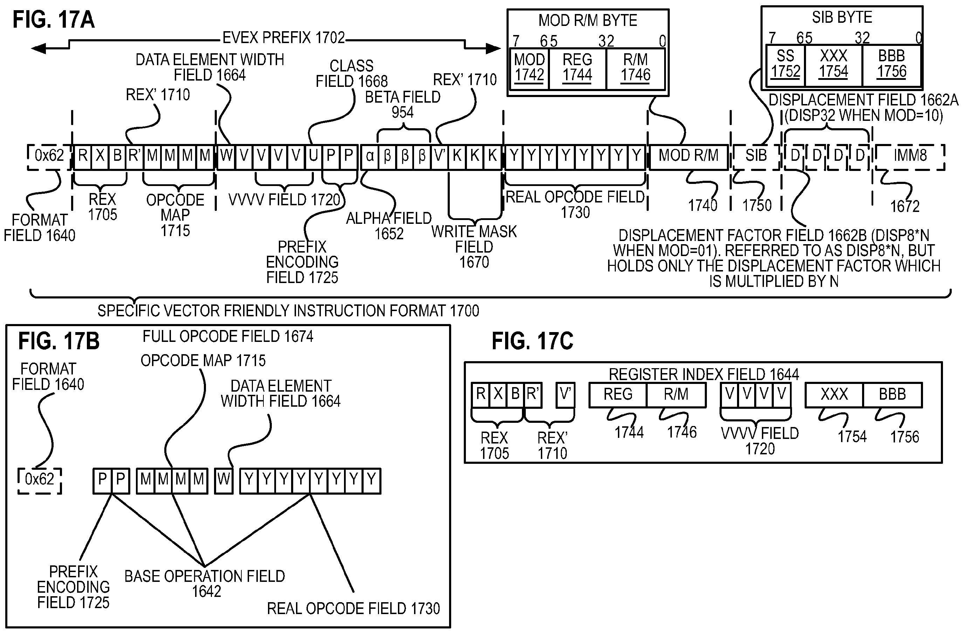

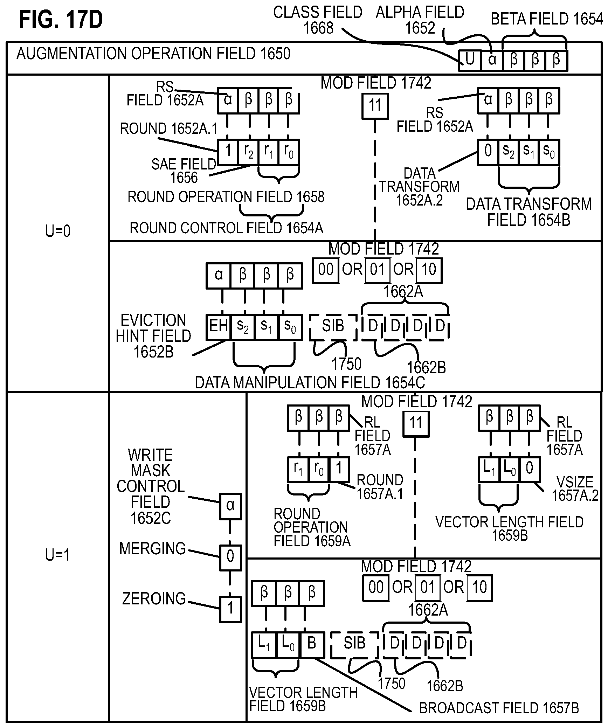

**Figure 17** is a block diagram illustrating an exemplary specific vector friendly instruction format according to an embodiment. **Figure 17** shows a specific vector friendly instruction format 1700 that is specific in the sense that it specifies the location, size, interpretation, and order of the fields, as well as values for some of those fields. The specific vector friendly instruction format 1700 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from **Figure 16** into which the fields from **Figure 17** map are illustrated.

It should be understood that, although embodiments are described with reference to the specific vector friendly instruction format 1700 in the context of the generic vector friendly instruction format 1600 for illustrative purposes, the invention is not limited to the specific vector friendly instruction format 1700 except where claimed. For example, the generic vector friendly instruction format 1600 contemplates a variety of possible sizes for the various fields, while the specific vector friendly instruction format 1700 is shown as having fields of specific sizes. By way of specific example, while the data element width field 1664 is illustrated as a one bit field in the specific vector friendly instruction format 1700, the invention is not so limited (that is, the generic vector friendly instruction format 1600 contemplates other sizes of the data element width field 1664).

The generic vector friendly instruction format 1600 includes the following fields listed below in the order illustrated in **Figure 17A****.**

EVEX Prefix (Bytes 0-3) 1702 - is encoded in a four-byte form.

Format Field 1640 (EVEX Byte 0, bits [7:0]) - the first byte (EVEX Byte 0) is the format field 1640 and it contains 0x62 (the unique value used for distinguishing the vector friendly instruction format in one embodiment of the invention).

The second-fourth bytes (EVEX Bytes 1-3) include a number of bit fields providing specific capability.

REX field 1705 (EVEX Byte 1, bits [7-5]) - consists of a EVEX.R bit field (EVEX Byte 1, bit [7] - R), EVEX.X bit field (EVEX byte 1, bit [6] - X), and 1657BEX byte 1, bit[5] - B). The EVEX.R, EVEX.X, and EVEX.B bit fields provide the same functionality as the corresponding VEX bit fields, and are encoded using Is complement form, i.e. ZMMO is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 1610 - this is the first part of the REX' field 1610 and is the EVEX.R' bit field (EVEX Byte 1, bit [4] - R') that is used to encode either the upper 16 or lower 16 of the extended 32 register set. In one embodiment of the invention, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 1715 (EVEX byte 1, bits [3:0] - mmmm) - its content encodes an implied leading opcode byte (OF, OF 38, or OF 3).

Data element width field 1664 (EVEX byte 2, bit [7] - W) - is represented by the notation EVEX.W. EVEX.W is used to define the granularity (size) of the datatype (either 32-bit data elements or 64-bit data elements).

EVEX.vvvv 1720 (EVEX Byte 2, bits [6:3]-vvvv)- the role of EVEX.vvvv may include the following: 1) EVEX.vvvv encodes the first source register operand, specified in inverted (Is complement) form and is valid for instructions with 2 or more source operands; 2) EVEX.vvvv encodes the destination register operand, specified in Is complement form for certain vector shifts; or 3) EVEX.vvvv does not encode any operand, the field is reserved and should contain 1111b. Thus, EVEX.vvvv field 1720 encodes the 4 low-order bits of the first source register specifier stored in inverted (Is complement) form. Depending on the instruction, an extra different EVEX bit field is used to extend the specifier size to 32 registers.

EVEX.U 1668 Class field (EVEX byte 2, bit [2]-U) - If EVEX.U = 0, it indicates class A or EVEX.UO; if EVEX.U = 1, it indicates class B or EVEX.U1.

Prefix encoding field 1725 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 1652 (EVEX byte 3, bit [7] - EH; also known as EVEX.EH, EVEX.rs, EVEX.RL, EVEX.write mask control, and EVEX.N; also illustrated with α) - as previously described, this field is context specific.

Beta field 1654 (EVEX byte 3, bits [6:4]-SSS, also known as EVEX.s₂₋₀, EVEX.r₂₋₀, EVEX.rr1, EVEX.LLO, EVEX.LLB; also illustrated with βββ) - as previously described, this field is context specific.

REX' field 1610 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Write mask field 1670 (EVEX byte 3, bits [2:0]-kkk) - its content specifies the index of a register in the write mask registers as previously described. In one embodiment of the invention, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 1730 (Byte 4) is also known as the opcode byte. Part of the opcode is specified in this field.

MOD R/M Field 1740 (Byte 5) includes MOD field 1742, Reg field 1744, and R/M field 1746. As previously described, the MOD field's 1742 content distinguishes between memory access and non-memory access operations. The role of Reg field 1744 can be summarized to two situations: encoding either the destination register operand or a source register operand, or be treated as an opcode extension and not used to encode any instruction operand. The role of R/M field 1746 may include the following: encoding the instruction operand that references a memory address, or encoding either the destination register operand or a source register operand.

Scale, Index, Base (SIB) Byte (Byte 6) - As previously described, the scale field's 1650 content is used for memory address generation. SIB.xxx 1754 and SIB.bbb 1756 - the contents of these fields have been previously referred to with regard to the register indexes Xxxx and Bbbb.

Displacement field 1662A (Bytes 7-10) - when MOD field 1742 contains 10, bytes 7-10 are the displacement field 1662A, and it works the same as the legacy 32-bit displacement (disp32) and works at byte granularity.

Displacement factor field 1662B (Byte 7) - when MOD field 1742 contains 01, byte 7 is the displacement factor field 1662B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 1662B is a reinterpretation of disp8; when using displacement factor field 1662B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 1662B substitutes the legacy x86 instruction set 8-bit displacement. Thus, the displacement factor field 1662B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset).

Immediate field 1672 operates as previously described.

### Full Opcode Field

**Figure 17B** is a block diagram illustrating the fields of the specific vector friendly instruction format 1700 that make up the full opcode field 1674 according to one embodiment of the invention. Specifically, the full opcode field 1674 includes the format field 1640, the base operation field 1642, and the data element width (W) field 1664. The base operation field 1642 includes the prefix encoding field 1725, the opcode map field 1715, and the real opcode field 1730.

### Register Index Field

**Figure 17C** is a block diagram illustrating the fields of the specific vector friendly instruction format 1700 that make up the register index field 1644 according to one embodiment of the invention. Specifically, the register index field 1644 includes the REX field 1705, the REX' field 1710, the MODR/M.reg field 1744, the MODR/M.r/m field 1746, the VVVV field 1720, xxx field 1754, and the bbb field 1756.

### Augmentation Operation Field

**Figure 17D** is a block diagram illustrating the fields of the specific vector friendly instruction format 1700 that make up the augmentation operation field 1650 according to one embodiment of the invention. When the class (U) field 1668 contains 0, it signifies EVEX.U0 (class A 1668A); when it contains 1, it signifies EVEX.U1 (class B 1668B). When U=0 and the MOD field 1742 contains 11 (signifying a no memory access operation), the alpha field 1652 (EVEX byte 3, bit [7] - EH) is interpreted as the rs field 1652A. When the rs field 1652A contains a 1 (round 1652A. 1), the beta field 1654 (EVEX byte 3, bits [6:4]- SSS) is interpreted as the round control field 1654A. The round control field 1654A includes a one bit SAE field 1656 and a two bit round operation field 1658. When the rs field 1652A contains a 0 (data transform 1652A.2), the beta field 1654 (EVEX byte 3, bits [6:4]- SSS) is interpreted as a three bit data transform field 1654B. When U=0 and the MOD field 1742 contains 00, 01, or 10 (signifying a memory access operation), the alpha field 1652 (EVEX byte 3, bit [7] - EH) is interpreted as the eviction hint (EH) field 1652B and the beta field 1654 (EVEX byte 3, bits [6:4]- SSS) is interpreted as a three bit data manipulation field 1654C.

When U=1, the alpha field 1652 (EVEX byte 3, bit [7] - EH) is interpreted as the write mask control (Z) field 1652C. When U=1 and the MOD field 1742 contains 11 (signifying a no memory access operation), part of the beta field 1654 (EVEX byte 3, bit [4]- S₀) is interpreted as the RL field 1657A; when it contains a 1 (round 1657A.1) the rest of the beta field 1654 (EVEX byte 3, bit [6-5]- S₂₋₁) is interpreted as the round operation field 1659A, while when the RL field 1657A contains a 0 (VSIZE 1657.A2) the rest of the beta field 1654 (EVEX byte 3, bit [6-5]- S₂₋₁) is interpreted as the vector length field 1659B (EVEX byte 3, bit [6-5]- L₁₋₀). When U=1 and the MOD field 1742 contains 00, 01, or 10 (signifying a memory access operation), the beta field 1654 (EVEX byte 3, bits [6:4]- SSS) is interpreted as the vector length field 1659B (EVEX byte 3, bit [6-5]- L₁₋₀) and the broadcast field 1657B (EVEX byte 3, bit [4]-B).

### Exemplary Register Architecture

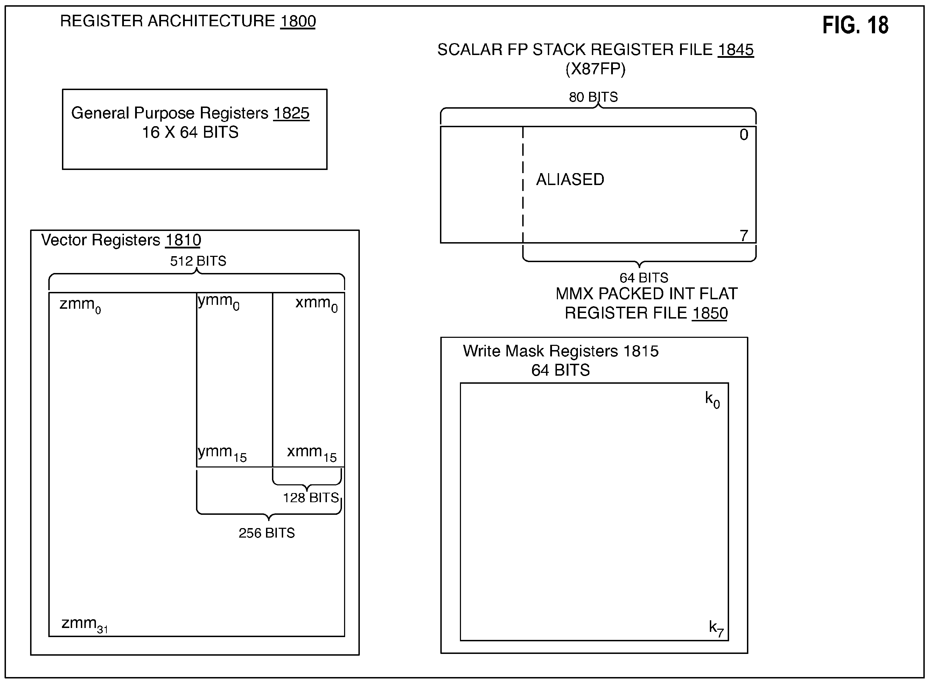

**Figure 18** is a block diagram of a register architecture 1800 according to one embodiment of the invention. In the embodiment illustrated, there are 32 vector registers 1810 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 1700 operates on these overlaid register file as illustrated in **Table 4** below.

**Table 4: Overlaid Register File**

| **Adjustable Vector Length** | **Class** | **Operations** | **Registers** |
|---|---|---|---|
| Instruction Templates that do not include the vector length field 1659B | A (Figure 16A; U=0) | 1610, 1615, 1625, 1630 | zmm registers (the vector length is 64 byte) |
| | B (Figure 16B; U=1) | 1612 | zmm registers (the vector length is 64 byte) |
| Instruction Templates that do include the vector length field 1659B | B (Figure 16B; U=1) | 1617, 1627 | zmm, ymm, or xmm registers (the vector length is 64 byte, 32 byte, or 16 byte) depending on the vector length field 1659B |

In other words, the vector length field 1659B selects between a maximum length and one or more other shorter lengths, where each such shorter length is half the length of the preceding length; and instructions templates without the vector length field 1659B operate on the maximum vector length. Further, in one embodiment, the class B instruction templates of the specific vector friendly instruction format 1700 operate on packed or scalar single/double-precision floating point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 1815 - in the embodiment illustrated, there are 8 write mask registers (k0 through k7), each 64 bits in size. In an alternate embodiment, the write mask registers 1815 are 16 bits in size. As previously described, in one embodiment of the invention, the vector mask register k0 cannot be used as a write mask; when the encoding that would normally indicate k0 is used for a write mask, it selects a hardwired write mask of OxFFFF, effectively disabling write masking for that instruction.

General-purpose registers 1825 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 1845, on which is aliased the MMX packed integer flat register file 1850 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments may use wider or narrower registers. Additionally, alternative embodiments may use more, less, or different register files and registers.

In the foregoing specification, the invention has been described with reference to specific exemplary embodiments thereof. It will, however, be evident that various modifications and changes may be made thereto without departing from the broader scope of the invention as set forth in the appended claims. The specification and drawings are, accordingly, to be regarded in an illustrative rather than a restrictive sense.

The instructions described herein refer to specific configurations of hardware, such as application specific integrated circuits (ASICs), configured to perform certain operations or having a predetermined functionality. Such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device.

Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well-known structures and functions were not described in elaborate detail in order to avoid obscuring the subject matter of the present invention.

## Claims

1. A processing apparatus (1455) comprising:
an instruction fetch unit (1410) to fetch a single instruction to perform memory conflict detection for a vectorized iterative scalar operation, the instruction including a first source operand indicating a first vector register and a second source operand indicating a second vector register, each vector register including a vectorized array including memory locations for a set of vectorized iterative scalar iterations;
decode logic (1430) to decode the instruction into a decoded instruction; and
an execution unit (1440) to execute the decoded instruction to perform the memory conflict detection for the vectorized iterative scalar operation and derive a partition vector including at least one conflict free group of scalar iterations; and
a register file unit (1405) to commit the partition vector to a location specified by a destination operand,
wherein the execution unit (1440) is to execute the decoded instruction to
for each pair of elements of the vectorized arrays, a pair of elements including an element of a first vectorized array at a first index and an element of a second vectorized array at a second index, the second index being less than the first index,
determine a conflict in the pair of elements if the element at the first index is equal to the element at the second index;
write a path length if the conflict is determined; and
set an element of the partition vector at the first index by bitwise OR-ing the element of the partition vector at the first index and an element of the partition vector at the second index left-shifted by the path length,
wherein elements of the partition vector having the same value forming a conflict free group of scalar iterations.

2. The processing apparatus (1455) as in claim 1 wherein the register file unit (1405) further to store a set of registers comprising:
the first vector register to store the first vectorized array;
the second vector register to store the second vectorized array; and
a third vector register to store the elements of the partition vector indicating the at least one conflict free group of scalar iterations.

3. The processing apparatus (1455) as in claim 2 wherein the vector registers are 128-bit or 256-bit registers.

4. The processing apparatus (1455) as in claim 2 wherein the vector registers are 512-bit registers.

5. A method to perform dynamic memory conflict detection using an integrated circuit, the method including:
fetching a single instruction (1502) to perform memory conflict detection for a vectorized iterative scalar operation, the instruction including a first source operand indicating a first vector register and a second source operand indicating a second vector register, each vector register including a vectorized array including memory locations for a set of vectorized iterative scalar iterations;
decoding the single instruction into a decoded instruction (1504);
fetching a first vectorized array associated with the first source operand and a second vectorized array associated with the second source operand; and
executing the decoded instruction to derive a partition vector including at least one conflict free group of scalar iterations (1506),
wherein the executing (1506) comprises:
for each pair of elements of the vectorized arrays, a pair of elements including an element of the first vectorized array at a first index and an element of the second vectorized array at a second index, the second index being less than the first index,
determining a conflict in the pair of elements if the element at the first index is equal to the element at the second index (1304);
writing a path length if the conflict is determined (1306); and
setting an element of the partition vector at the first index by bitwise OR-ing the element of the partition vector at the first index and an element of the partition vector at the second index left-shifted by the path length (1308),
wherein elements of the partition vector having the same value forming a conflict free group of scalar iterations.

## Patentansprüche

1. Verarbeitungsvorrichtung (1455), die Folgendes umfasst:
eine Anweisungsabrufeinheit (1410), um eine einzelne Anweisung abzurufen, um eine Speicherkonfliktdetektion für eine vektorisierte iterative Skalaroperation durchzuführen, wobei die Anweisung einen ersten Quelloperanden, der ein erstes Vektorregister anzeigt, und einen zweiten Quelloperanden, der ein zweites Vektorregister anzeigt, enthält, wobei jedes Vektorregister ein vektorisiertes Datenfeld enthält, das Speicherorte für einen Satz von vektorisierten iterativen skalaren Iterationen enthält;
Decodierungslogik (1430), um die Anweisung in eine decodierte Anweisung zu decodieren; und
eine Ausführungseinheit (1440), um die decodierte Anweisung auszuführen, um die Speicherkonfliktdetektion für die vektorisierte iterative Skalaroperation durchzuführen, und einen Partitionsvektor abzuleiten, der mindestens eine konfliktfreie Gruppe von skalaren Iterationen enthält; und
eine Registerdateieinheit (1405), um den Partitionsvektor an einen Ort zu übergeben, der durch einen Zieloperanden spezifiziert ist,
wobei die Ausführungseinheit (1440) die decodierte Anweisung ausführen soll, um
für jedes Paar von Elementen der vektorisierten Datenfelder ein Paar von Elementen, das ein Element eines ersten vektorisierten Datenfelds an einem ersten Index, und ein Element eines zweiten vektorisierten Datenfelds an einem zweiten Index enthält, wobei der zweite Index kleiner ist als der erste Index,
einen Konflikt in dem Paar von Elementen zu bestimmen, wenn das Element an dem ersten Index gleich dem Element an dem zweiten Index ist;
eine Pfadlänge zu schreiben, wenn der Konflikt bestimmt worden ist; und
ein Element des Partitionsvektors an dem ersten Index durch bitweise ODER-Verknüpfung des Elements des Partitionsvektors an dem ersten Index und eines Elements des Partitionsvektors an dem zweiten Index, um die Pfadlänge nach links verschoben einzustellen,
wobei Elemente des Partitionsvektors, die den selben Wert aufweisen, eine konfliktfreie Gruppe von skalaren Iterationen bilden.

2. Verarbeitungsvorrichtung (1455) nach Anspruch 1, wobei die Registerdateieinheit (1405) ferner einen Satz von Registern speichern soll, der Folgendes umfasst:
das erste Vektorregister, um das erste vektorisierte Datenfeld zu speichern;
das zweite Vektorregister, um das zweite vektorisierte Datenfeld zu speichern; und
ein drittes Vektorregister, um die Elemente des Partitionsvektors zu speichern, der die mindestens eine konfliktfreie Gruppe von skalaren Iterationen anzeigt.

3. Verarbeitungsvorrichtung (1455) nach Anspruch 2, wobei die Vektorregister 128-Bit- oder 256-Bit-Register sind.

4. Verarbeitungsvorrichtung (1455) nach Anspruch 2, wobei die Vektorregister 512-Bit-Register sind.

5. Verfahren zum Durchführen einer dynamischen Speicherkonfliktdetektion unter Verwendung einer integrierten Schaltung, wobei das Verfahren Folgendes enthält:
Abrufen (1502) einer einzelnen Anweisung, um eine Speicherkonfliktdetektion für eine vektorisierte iterative Skalaroperation durchzuführen, wobei die Anweisung einen ersten Quelloperanden, der ein erstes Vektorregister anzeigt, und einen zweiten Quelloperanden, der ein zweites Vektorregister anzeigt, enthält, wobei jedes Vektorregister ein vektorisiertes Datenfeld enthält, das Speicherorte für einen Satz von vektorisierten iterativen skalaren Iterationen enthält;
Decodieren (1504) der einzelnen Anweisung in eine decodierte Anweisung;
Abrufen eines ersten vektorisierten Datenfelds, das dem ersten Quelloperanden zugeordnet ist, und eines zweiten vektorisierten Datenfelds, das dem zweiten Quelloperanden zugeordnet ist; und
Ausführen (1506) der decodierten Anweisung, um einen Partitionsvektor abzuleiten, der mindestens eine konfliktfreie Gruppe von skalaren Iterationen enthält,
wobei das Ausführen (1506) Folgendes umfasst:
für jedes Paar von Elementen der vektorisierten Datenfelder ein Paar von Elementen, das ein Element des ersten vektorisierten Datenfelds an einem ersten Index, und ein Element des zweiten vektorisierten Datenfelds an einem zweiten Index enthält, wobei der zweite Index kleiner ist als der erste Index,
Bestimmen (1304) eines Konflikts in dem Paar von Elementen, wenn das Element an dem ersten Index gleich dem Element an dem zweiten Index ist;
Schreiben (1306) einer Pfadlänge, wenn der Konflikt bestimmt worden ist (1306); und
Einstellen (1308) eines Elements des Partitionsvektors an dem ersten Index, durch bitweise ODER-Verknüpfung des Elements des Partitionsvektors an dem ersten Index und einem Element des Partitionsvektors an dem zweiten Index, um die Pfadlänge nach links verschoben,
wobei Elemente des Partitionsvektors, die den selben Wert aufweisen, eine konfliktfreie Gruppe von skalaren Iterationen bilden.

## Revendications

1. Appareil de traitement (1455), comprenant :
une unité de chargement d'instruction (1410) destinée à charger une instruction simple pour réaliser une détection de conflit mémoire pour une opération scalaire itérative vectorisée, l'instruction comportant un premier opérande source indiquant un premier registre vectoriel et un deuxième opérande source indiquant un deuxième registre vectoriel, chaque registre vectoriel comportant un tableau vectorisé comportant des emplacements mémoire pour un ensemble d'itérations scalaires itératives vectorisées ;
une logique de décodage (1430) destinée à décoder l'instruction en une instruction décodée ; et
une unité d'exécution (1440) destinée à exécuter l'instruction décodée pour réaliser la détection de conflit mémoire pour l'opération scalaire itérative vectorisée et en déduire un vecteur partition comportant au moins un groupe sans conflit d'itérations scalaires ; et
une unité de fichiers de registre (1405) destinée à engager le vecteur partition vis-à-vis d'un emplacement stipulé par un opérande de destination,
l'unité d'exécution (1440) étant destinée à exécuter l'instruction décodée pour
pour chaque paire d'éléments des tableaux vectorisés, une paire d'éléments comportant un élément d'un premier tableau vectorisé à un premier index et un élément d'un deuxième tableau vectorisé à un deuxième index, le deuxième index étant inférieur au premier index,
déterminer un conflit dans la paire d'éléments si l'élément au premier index est égal à l'élément au deuxième index ;
écrire une longueur de chemin si le conflit est déterminé ; et
positionner un élément du vecteur partition au premier index en exécutant une opération OU au niveau du bit sur l'élément du vecteur partition au premier index et sur un élément du vecteur partition au deuxième index décalé à gauche de la longueur de chemin,
des éléments du vecteur partition ayant la même valeur forment un groupe sans conflit d'itérations scalaires.

2. Appareil de traitement (1455) selon la revendication 1, dans lequel l'unité de fichiers de registre (1405) est destinée en outre à stocker un ensemble de registres comprenant :
le premier registre vectoriel destiné à stocker le premier tableau vectorisé ;
le deuxième registre vectoriel destiné à stocker le deuxième tableau vectorisé ; et
un troisième registre vectoriel destiné à stocker les éléments du vecteur partition indiquant l'au moins un groupe sans conflit d'itérations scalaires.

3. Appareil de traitement (1455) selon la revendication 2, dans lequel les registres vectoriels sont des registres 128 bits ou 256 bits.

4. Appareil de traitement (1455) selon la revendication 2, dans lequel les registres vectoriels sont des registres 512 bits.

5. Procédé de réalisation d'une détection dynamique de conflit mémoire au moyen d'un circuit intégré, le procédé comprenant :
le chargement d'une instruction simple (1502) pour réaliser une détection de conflit mémoire pour une opération scalaire itérative vectorisée, l'instruction comportant un premier opérande source indiquant un premier registre vectoriel et un deuxième opérande source indiquant un deuxième registre vectoriel, chaque registre vectoriel comportant un tableau vectorisé comportant des emplacements mémoire pour un ensemble d'itérations scalaires itératives vectorisées ;
le décodage de l'instruction simple en une instruction décodée (1504) ;
le chargement d'un premier tableau vectorisé associé au premier opérande source et d'un deuxième tableau vectorisé associé au deuxième opérande source ; et
l'exécution de l'instruction décodée pour en déduire un vecteur partition comportant au moins un groupe sans conflit d'itérations scalaires (1506),
l'exécution (1506) comprenant :
pour chaque paire d'éléments des tableaux vectorisés, une paire d'éléments comportant un élément du premier tableau vectorisé à un premier index et un élément du deuxième tableau vectorisé à un deuxième index, le deuxième index étant inférieur au premier index,
la détermination d'un conflit dans la paire d'éléments si l'élément au premier index est égal à l'élément au deuxième index (1304) ;
l'écriture d'une longueur de chemin si le conflit est déterminé (1306) ; et
le positionnement d'un élément du vecteur partition au premier index par exécution d'une opération OU au niveau du bit sur l'élément du vecteur partition au premier index et sur un élément du vecteur partition au deuxième index décalé à gauche de la longueur de chemin (1308),
des éléments du vecteur partition ayant la même valeur forment un groupe sans conflit d'itérations scalaires.
